# EUROPÄISCHE PATENTSCHRIFT

(11) **EP 1 608 485 B1**
(45) Veröffentlichungstag und Bekanntmachung des Hinweises auf die Patenterteilung: **13.04.2011**
(21) Anmeldenummer: 04719406.3
(22) Anmeldetag: 11.03.2004
(51) Int. Cl.: B24B 13/005, B24B 13/06, B29D 11/00

(54) **VERFAHREN UND VORRICHTUNG ZUR FERTIGUNG VON BRILLENGLÄSERN UND ANDEREN FORMKÖRPERN MIT OPTISCH AKTIVEN OBERFLÄCHEN**
METHOD AND DEVICE FOR PRODUCING OPHTHALMIC LENSES AND OTHER SHAPED BODIES WITH OPTICALLY ACTIVE SURFACES
PROCEDE ET DISPOSITIF POUR REALISER DES VERRES DE LUNETTES ET D'AUTRES CORPS MOULES AYANT DES SURFACE OPTIQUEMENT ACTIVES

(30) Priorität: 11.03.2003 DE 10310561; 02.04.2003 DE 10315008; 24.04.2003 DE 10318597; 18.07.2003 DE 10332673
(43) Veröffentlichungstag der Anmeldung: 28.12.2005
(73) Patentinhaber: Optotech Optikmaschinen GmbH, 35435 Wettenberg/Launsbach (DE); Carl Zeiss Vision GmbH, 73430 Aalen (DE)
(72) Erfinder: MANDLER, Roland, 35452 Heuchelheim (DE); REINHOLD Weis, 73492 Rainau-Dalkingen (DE)
(74) Vertreter: Buchhold, Jürgen
(86) Internationale Anmeldenummer: PCT/EP2004/002515
(87) Internationale Veröffentlichungsnummer: WO 2004/080653

(56) Entgegenhaltungen:
- EP-A- 0 896 875
- WO-A-02/37168
- DE-C- 10 036 158

## Beschreibung

Die Erfindung betrifft ein Verfahren und eine Vorrichtung zur Fertigung von Brillengläsern und anderen Formkörpern mit optisch aktiven Oberflächen gemäß dem Oberbegriff der Ansprüche 1,17,20, 26 und 32.

Brillengläser werden oft aus Kunststoffen gefertigt, die bei hohem Brechungsindex über ein kleines spezifisches Gewicht verfügen und gut zerspanbar sind. Das Verfahren kann aber auch für Brillengläser aus Silikatglas verwendet werden. Die Bearbeitung erfolgt gewöhnlich durch spannehmende Bearbeitung auf Fräs-, Dreh-, Schleif- und Poliermaschinen.

Zur sprachlichen Vereinfachung wird nachstehend an Stelle von "Brillengläsern und anderen Formkörpern" nur noch von Brillengläser" gesprochen, gemeint sind aber immer auch andere vergleichbare Formkörper mit ähnlichen Eigenschaften. Auch wenn im nachstehenden Text nur noch von Brillengläsern aus Kunststoff gesprochen wird, so sind dennoch auch immer solche aus Silikat- oder Mineralglas gemeint.

Für Herstellungsverfahren von modernen Brillengläsern gilt u.a. folgende Anforderung:
■ Eine sogenannte Dickenoptimierung muß möglich sein, mit der das Gewicht der Brillengläser zur Erhöhung des Tragekomforts minimiert wird. Hierzu müssen Form und Größe der Brillenfassung bekannt sein. Dies gilt, sowohl bezüglich der Umrisslinie der Brillenfassung, als auch bezüglich ihrer Breite. Nachstehend wird die gedanklich auf das Werkstück projizierte Umrisslinie der Brillenfassung als "virtuelle Umrisslinie" bezeichnet.
■ Bei Plus-Gläsern (Linsenmitte ist dicker als Linsenrand) und bei Neutral-Gläsern (Linsenmitte ist gleich dick wie Linsenrand) wird bei der Dickenoptimierung die Dicke der Linsen soweit reduziert, wie dies im Hinblick auf die verbleibende Randdicke entlang der virtuellen Umrisslinie (= Dicke am Umfangsrand des fertigen Brillenglases) möglich ist. Die Randdicke muß eingehalten werden, damit die Linse in der Brillenfassung einwandfrei montiert werden kann, d. h. die Randdicke muß in etwa der Breite des Rahmens der Brillenfassung entsprechen.
■ Bei Minus-Gläsern (Linsenmitte ist dünner als Linsenrand) wird im Rahmen der Dickenoptimierung die Dicke der Linsen soweit reduziert, wie dies im Hinblick auf die verbleibende Restdicke in der Linsenmitte möglich ist. Eine gewisse Mindestdicke in der Linsenmitte ist erforderlich, damit die mechanische Stabilität des Brillenglases gewährleistet ist.

Bei der nachfolgenden Beschreibung des erfindungsgemäßen Verfahrens wird im wesentlichen auf Plus-Gläser Bezug genommen, da die Vorteile des Verfahrens hier besonders prägnant hervortreten. Das Verfahren lässt sich analog, aber auch bei Neutral- und Minus-Gläsern anwenden.

Weil die beiden optisch aktiven Oberflächen von Plus-Gläsern (Vorder und Rückseite) nicht planparallel zueinander liegen, sondern an verschiedenen Stellen verschiedene Winkel zueinander aufweisen, spielt bei der Dickenoptimierung die Größen des Brillenglases eine entscheidende Rolle. Form und Größe der Brillenfassung müssen daher vor der Dickenoptimierung bekannt sein. Ausgehend von einer vorgegebenen Dicke am Rand (Brillenfassung) wird die größere Dicke in der Linsenmitte bestimmt.

Bei der Herstellung von Brillengläsern unter Beachtung der vorgenannten Anforderungen (Dickenoptimierung) ergeben sich folgende Probleme:
1. Die Brillengläser lassen sich während der Herstellungsprozesse (Flächenbearbeitung und Randbearbeitung) nach dem Stand der Technik nur mit besonders großem Aufwand für die verschiedenen Bearbeitungsschritte festspannen, da bei der Flächenbearbeitung der Randbereich angeschnitten wird und der Rand außerdem bearbeitet werden muß.
   Der Rand ist daher als Spannfläche nur geeignet, wenn besondere Verfahren angewandt werden. Nach der Randbearbeitung sind die Brillengläser am Umfang nicht mehr kreisrund, sondern entsprechend den verschiedenen Formen und Größen der Brillenfassungen geformt (entweder exakt oder mit einer Bearbeitungszugabe für den Optiker).
   Diese nahezu beliebigen Formen und Größen machten es erforderlich, spezielle Spann- und Fertigungsverfahren zu entwickeln.
2. Durch die Dickenoptimierung (Brillenglas so dünn wie möglich) und die verwendeten Kunststoffe als Linsenmaterial (relativ geringe Festigkeit) werden die erzeugten Brillengläser während der spannehmenden Fertigung zunehmend instabiler. In dem Maße wie sie durch den Materialabtrag dünner werden, verlieren sie an Stabilität und weichen dem Druck der Bearbeitungswerkzeuge aus, was zu unerwünschten Veränderungen der Oberflächengeometrie führt. Auch in diesem Zusammenhang mußten Verfahren gefunden werden, die der genannten Instabilität entgegen wirken.
3. Wenn der äußere Umriss der Linse, bis auf eine geringe Zugabe von 1 bis 2 mm, bereits dem endgültigen Brillenglas entspricht, muß naturgemäß bis zum Rand feinstgeschliffen und poliert werden. Unter wirtschaftlichen Gesichtspunkten kann mit den üblichen Werkzeugen jedoch nicht randgenau feinstgeschliffen und poliert werden.
   Aus diesem Grund fahren die Werkzeuge während der Bearbeitung über den Rand des Brillenglases hinaus. Die Folge ist, dass durch die Kantenpressung im Randbereich ein unerwünscht großer Materialabtrag stattfindet und dadurch die vorher erzeugte präzise Linsengeometrie zum Teil wieder verloren geht. Dieses Einebnen der Linsengeometrie im Randbereich ist ein erheblicher Nachteil.

Verfahren mit denen die genannten Probleme vermieden werden können, sowie Vorrichtungen zur Durchführung dieser Verfahren sind bekannt.

So wird z.B. in DE-A1-40 03 002 ein Verfahren zur Herstellung von Brillengläsern beschrieben, bei dem die Brillengläser vor der Bearbeitung aufgeblockt werden. Hierunter versteht man die Befestigung des gegossenen oder gepreßten Kunststoffrohlings an einem sogenannten Blockstück mit einem Woodchen-Metall. Das Blockstück ist so ausgebildet, daß es einerseits leicht an den Werkstückspindeln der Bearbeitungsmaschinen befestigt werden kann und andererseits Strukturen aufweist, an denen das Woodche-Metall gut haftet.

Vorzugsweise werden Kunststoffrohlinge benutzt, deren eine Seite (vorzugsweise die konvexe Vorderseite) während des Gieß- oder Pressvorgangs bereits fertiggestellt wird. Das heißt die Oberflächengeometrie und die Oberflächenqualität entsprechen bereits den endgültigen Anforderungen und werden nicht mehr verändert. Die Oberflächengeometrie ist üblicherweise bifokal mit gleitenden Übergängen (progressiv) ausgeführt. Diese Seite wird aufgeblockt, damit die konkave Rückseite (Rohzustand) und der Umfang bearbeitet werden können.

Da der Rohling bereits eine fertige Seite aufweist, die nicht mehr bearbeitet werden muß, genügt ein einziger Blockvorgang. Nach dem Aufblocken kann die Linse an der Werkstückspindel der Bearbeitungsmaschine festgespannt werden. Durch die Verbindung mit dem Woodchen-Metall (Abstützwirkung) ist auch die erforderliche mechanische Stabilität für die nachfolgenden Bearbeitungsvorgänge gegeben.

Der Arbeitsablauf nach dem Stand der Technik stellt sich mithin wie folgt dar:

Der halbfertige Kunststoffrohling wird auf der bereits fertigen Seite mit einem Schutzlack überzogen und dann mit dem Blockstück in Verbindung gebracht. Hierbei muß die Achslage der bereits fertigen Linsenoberfläche (z. B. bifokal) sehr genau zur Achslage (Drehwinkel) des Blockstücks ausgerichtet werden. Dies ist wichtig, damit später die Oberflächengeometrien der Linsenvorder- und -rückseiten zusammenpassen. Der Zwischenraum zwischen Kunststoffrohling und Blockstück wird mit Woodchem-Metall ausgegossen. Dieses verbindet sich dabei mit dem Schutzlack, so daß eine feste Haftung entsteht.

Der Kunststoffrohling wird mit dem Blockstück an der Werkstückspindel einer Bearbeitungsmaschine befestigt. Anschließend wird die gewünschte Oberflächengeometrie an der zuvor rohen Oberfläche der zweiten Linsenseite (üblicherweise der konkaven Linsenrückseite) durch Fräsen oder Drehen hergestellt. Hierbei wird auch der Rand bearbeitet und die Dicke optimiert, d.h. das Werkstück (= angearbeitetes Halbfertigteil) erhält eine äußere Kontur, die der Umrisslinie der Brillenfassung bereits weitgehend entspricht, plus einer Zugabe von etwa 1 bis 2 mm für den Optiker.

Die Randbearbeitung entlang der virtuellen Umrisslinie ist notwendig, da sonst beim Bearbeiten des Randbereichs der konvexen Linsenvorderseite, die Rückseite des Werkstücks angeschnitten würde. Ursache hierfür ist, daß der Durchmesser des Halbfertigteils deutlich größer ist als die virtuelle Umrisslinie des herzustellenden Brillenglases und längs dieser virtuellen Umrisslinie eine kleine Dicke an dem Werkstück hergestellt werden muß, die dem Rahmen der Brillenfassung entspricht.

Da bei Plus-Gläsern die Dicke des Werkstücks zum Rand hin weiter abnimmt und auf der virtuellen Umrisslinie schon sehr dünn ist, würde das vorgenannte Anschneiden der Linsenrückseite beim Bearbeiten der Linsenvorderseite sehr häufig entstehen. Dies gilt insbesondere dann, wenn es sich um relativ kleine Brillengläser handelt.

Durch das Anschneiden der Linsenrückseite bei der Bearbeitung der Linsenvorderseite würde jedoch ein scharfer, dünner Rand mit geringer Stabilität entstehen, der nicht mehr weiter bearbeitet werden könnte. Aus diesem Grund erfolgt vor der Bearbeitung der konvexen Linsenvorderseite die erwähnte Randbearbeitung entsprechend der virtuellen Umrisslinie, so daß dieser Randbereich wegfällt.

Weitere mechanische Bearbeitungsvorgänge wie Feinschleifen mittels Formwerkzeugen (Schleifpads) auf Feinschleifmaschinen und Polieren mittels Formwerkzeugen (Polierfolien) auf Poliermaschinen schließen sich an. Ferner sind noch feine Gravuren zur Kennzeichnung der Brillengläser und ihrer Achsen anzubringen, was jedoch ohne standardisierte Spanneinrichtung sehr aufwendig ist. Es folgt das Abblocken in heißem Wasser und das Entfernen des Schutzlack.

Nach dem Abblocken müssen die individuell geformten Werkstücke weitere Fertigungsschritte durchlaufen, was zu weiteren Mehrkosten führt, vor allem weil Transport- und Bearbeitungsmaschinen mit speziellen Spannvorrichtungen erforderlich sind.

Schließlich werden die Brillengläser gewaschen und mit einer sogenannten Coating-Schicht überzogen, die zur Verbesserung der optischen Eigenschaften (z. B. Entspiegelung) und der Kratzfestigkeit dienen. Hierbei müssen die Brillengläser auf Masken aufgelegt werden, deren Ausschnitt in etwa dem äußeren Umfang der Gläser entspricht. Damit wird verhindert, daß bei dem Coating-Vorgang das von oben zugeführte Beschichtungsmaterial an den Brillengläsern vorbei nach unten gelangt und unerwünschte Verunreinigungen entstehen.

Wegen der Anpassung der Masken an die äußere Kontur der Brillengläser muß ein großer Lagervorrat an Masken vorgehalten werden. Daraus resultieren erhebliche Kosten.

Die endgültige Randbearbeitung und Anpassung an die Brillenfassung wird später vom Brillenoptiker durchgeführt.

Eine Vorrichtung zur Durchführung eines derartigen Verfahrens ist aus DE 195 29 786 C1 bekannt. Dort wird der Formkörper mit optisch aktiven Oberflächen auf einem Werkstückhalter aufgeblockt, der an einer Spindel konzentrisch befestigt ist. Die Spindel wird mit Hilfe eines Servomotors gesteuert drehbar angetrieben. Die Bewegung eines Werkzeugs und der Spindel wird dabei CNC-gesteuert.

In EP 0 896 875 A2 wird ein Verfahren zum Herstellung von Kontaktlinsen beschrieben, wobei die Kontaktlinsen zunächst mittels Gießen in ihrer Grundform hergestellt werden. Dabei wird zunächst auch ein Formrand an die Kontaktlinse mit angeformt, der dazu dient, daß nach Entfernen eines ersten Teils der Gießform die Kontaktlinse sicher an der zweiten Form gehalten werden kann. Es erfolgt dann eine mechanische Bearbeitung der von der zweiten Gießform abgewandten Oberfläche der Kontaktlinse. Anschließend wird die Kontaktlinse von der zweiten Gießform gelöst und an der bereits bearbeiteten Oberfläche gehalten, woraufhin die Rückseite der Kontaktlinse mechanisch bearbeitet wird. Dabei wird auch der bis dahin vorhandene Formrand abgetrennt. Bei allen Bearbeitungsschritten erfolgt eine großflächige Halterung der Kontaktlinse über eine gesamte Seite.

Das vorstehend beschriebene Verfahren, wie in DE-A1-40 03 002 vorgeschlagen, hat eine Reihe wesentlicher Nachteile:
■ Das Aufblocken mit Woodschem-Metall ist ein aufwendiger, teurer Arbeitsschritt. Er eignet sich nur bedingt für automatische Fertigungsverfahren.
■ Das Woodsche-Metall enthält gesundheitsschädliche Bestandteile (z. B. 12,5 % Cadmium) und ist daher nur unter Einhaltung besonderer Schutzmaßnahmen zu verarbeiten.
■ Beim Auf und Abblocken gehen ca. 10 % des Metalls verloren. Bei einer jährlichen Fertigungsmenge von weltweit einigen 100 Millionen Brillengläsern stellt dies nicht nur einen erheblichen Kostenfaktor dar, sondern ist auch ein großes Umweltproblem.
■ Da aus Kostengründen nur ein einziger Aufblockvorgang durchgeführt werden soll, muß eine Seite des Brillenglases an dem Kunststoffrohling (vorzugsweise die Außenkurve) durch den vorausgehenden Gieß- oder Preßvorgang bereits angeformt werden. Als Konsequenz hieraus folgt, daß zahlreiche halbfertige Kunststoffrohlinge auf Lager gelegt werden müssen. Allein für die bifokalen Brillengläser ergibt sich folgende Rechnung:
   9 verschiedene Außenkurven, 11 verschiedene Nahteilkombinationen, 3 bis 4 verschiedene Brechungsindizes und 3 bis 4 verschiedene Designs (abhängig von der Brillenform) und alle genannten Parameter sowohl für das rechte als auch für das linke Brillenglas ergeben beispielweise nicht weniger als 3.000 verschiedene halbfertige Kunststoffrohlinge. Bei einer Lagerreichweite von 2 bis 3 Monaten errechnet sich hieraus ein Lagerbestand von etwa 500.000 Stück. Da der Preis für die halbfertigen Kunststoffrohlinge im Mittel bei 13,- Euro/Paar liegt, ergibt sich hieraus ein Lagerbestand im Wert von über 3 Millionen Euro. Die Kosten für dieses Lager sind sehr hoch und verteuern das genannte Verfahren erheblich.
■ Ein weiterer Nachteil besteht darin, daß eine sogenannte Rezeptfertigung nicht möglich ist. Hierunter versteht man das exakte Anpassen der Brillengläser an den zu korrigierenden Augenfehler, wie im Rezept des Augenarztes beschrieben.
   Da bei dem genannten Verfahren eine Seite an dem Kunststoffrohling bereits fertig gestellt ist, müssen die Außenkurven und die Nahteilkombinationen relativ grob abgestuft sein (beispielsweise um ¼ Dioptrie), damit der Lagerbestand nicht noch weiter vergrößert wird. Der Brillenoptiker kann daher nur ein Brillenglas innerhalb der vorgegebenen Dioptriesprünge auswählen, das dem Rezept möglichst nahe kommt.
■ Das Vorhalten der vielen unterschiedlichen Masken für das Coating verursacht ebenfalls hohe Kosten.

Ein anderes Verfahren wird in DE-C1-100 36 158 vorgeschlagen. Dieses kommt zwar ohne Aufblocken aus. Allerdings müssen die Linsen im Lauf der Bearbeitung zerschnitten und anschließend wieder zusammengeschweißt werden.

Auch hier ergeben sich die gleichen Probleme im Zusammenhang mit der Dickenoptimierung wie zuvor beschrieben (die. Linse muß gespannt und mechanisch stabilisiert werden). Verwendet werden Kunststoffrohlinge in Form von runden, flachen Scheiben, deren Durchmesser deutlich größer ist, als derjenige der herzustellenden - Brillengläser. Die Kunststoffrohlinge sind entweder völlig roh oder grob vorgeformt. Grundsätzlich könnten auch halbfertige Kunststoffrohlinge benutzt werden, wobei sich jedoch auch hier der Nachteil des großen Lagerbestandes ergeben würde und eine Rezeptfertigung nicht möglich wäre.

Obwohl das in DE-C1-100 36 158 offenbarte Verfahren einige Nachteile des in DE-A1-40 03 002 vorgeschlagenen Verfahrens vermeidet, ergeben sich jedoch andere Nachteile:
■ Das Ausschneiden der halbfertigen Linse aus dem äußeren Rand mit axialem Verschieben und anschließendem Verschweißen der beiden Teile, erfordert eine aufwendige Spezialmaschine mit Lasereinrichtungen, die entsprechend teuer ist.
   Das Fertigungsverfahren wird zudem durch die zusätzlichen Arbeitsschritte auf der Spezialmaschine erheblich verteuert.
■ Das zweimalige Ausschneiden und das Verschweißen der beiden Teile mittels Laser führt zu erheblichen, bleibenden Wärmespannungen in den fertigen Linsen. Viele der benutzten Kunststoffe sind jedoch sehr anfällig gegen solche Wärmespannungen und reagieren nach einiger Zeit mit Rissbildung im Randbereich. Dies ist nicht akzeptabel und stellt einen erheblichen Nachteil des Verfahrens dar.
   Ein Ausschneiden der halbfertigen Linse mit mechanischen Werkzeugen (zum Vermeiden der Wärmespannungen) ist nicht möglich, da der dadurch entstehende Spalt zu groß werden würde und sich die Linse mit dem äußeren Ring nicht mehr passgenau verbinden ließe.

Ziel der Erfindung ist es, diese und weitere Nachteile des Standes der Technik zu überwinden und ein Verfahren und eine Vorrichtung zu entwickeln, mit dem bzw. mit der Brillengläser unter den nachfolgend aufgeführten Vorgaben hergestellt werden können:
1. Das Aufblocken soll nach Möglichkeit vermieden werden.
2. Das Verfahren muß sich automatisieren lassen.
3. Die Herstellung der Brillengläser muß kostengünstig sein.
4. Rezeptfertigung muß möglich sein (genaue Anpassung des Brillenglases an das vorgegebene Rezept, ohne Dioptriensprünge).
5. Für das Coating werden keine individuellen Masken benötigt.
6. Der Lagervorrat an Kunststoffrohlingen soll möglichst gering sein.
7. Teure Spezialmaschinen werden nicht benötigt.
8. Wärmespannungen in den Brillengläsern werden vermieden.

Ein weiteres Ziel der Erfindung besteht darin, ein Verfahren zu entwickeln, mit dem sich die Herstellkosten für Brillengläser gegenüber herkömmlichen Verfahren deutlich senken lassen, bei gleichzeitiger Steigerung der Qualität.

Hauptmerkmale der Erfindung sind im kennzeichnenden Teil der Ansprüche 1, 17, 20, 26 und 32 angegeben. Vorteilhafte Ausgestaltungen ergeben sich aus den Merkmalen der Unteransprüche.

Bei dem erfindungsgemäßen Verfahren werden als Ausgangsmaterial für die herzustellenden Brillengläser Kunststoffrohlinge benutzt, welche die Form von flachen, runden Scheiben haben (Dicke ist kleiner als Durchmesser). Die Form der beiden Flächen (Vorder- und Rückseite) ist beliebig. Der Durchmesser der Kunststoffrohlinge wird 5 bis 7 mm größer gewählt als dies bei den Verfahren nach dem Stand der Technik üblich ist. Daraus resultiert zwar ein etwas größerer Materialverbrauch, der jedoch im Gesamtzusammenhang des Verfahrens und seiner Vorteile vernachlässigbar ist.

Als Kunststoffrohlinge werden sogenannte Rohteile benutzt, deren Flächen eben sind oder über ein oder beidseitig vorgeformte Strukturen verfügen. Diese werden ggf. beim Gießen bzw. Pressen der Kunststoffrohlinge angeformt. Fertige Oberflächen mit optischen Qualitäten sind in diesem Fall nicht vorhanden.

Ein wichtiges Grundprinzip des erfindungsgemäßen Verfahrens besteht darin, daß die Kunststoffrohlinge während aller Bearbeitungsschritte am äußeren Umfang gespannt werden (schließend oder spreizend) und die spannehmende Bearbeitung so geführt wird, daß ein ringförmiger Bereich am äußeren Umfang erhalten bleibt, dessen Dicke etwa derjenigen des Kunststoffrohlings entspricht.

Bei der nachstehenden Beschreibung wird immer von schließenden Werkzeugen ausgegangen, es ist jedoch genauso gut möglich, mit spreizenden Werkzeugen zu arbeiten. Bei den spreizenden Werkzeugen bewegen sich die Spannelemente beim Spannen des Werkstücks von Innen nach Außen und legen sich an einen Bund (Rand) des Kunststoffrohlings an, der in diesem Fall entsprechend geformt sein muß.

Erst wenn alle Arbeitsgänge (Fräsen, Drehen, Feinschleifen, ggf. Polieren, Markieren und Coating) beendet sind, wird das eigentliche Brillenglas von dem äußeren, ringförmigen Bereich abgetrennt. Dies kann z. B. auf mechanischem Wege mittels Fräser erfolgen.

Dieses Fertigungsverfahren kann mit großen Vorteilen bei allen Linsenformen (Plus-, Minus- und Neutral-Gläser) angewandt werden. Besonders groß sind diese Vorteile bei Plus- und Neutral-Gläsern, da diese einen dünnen Rand haben und daher die Probleme mit dem Spannen und der Stabilität der Werkstücke hier besonders groß sind.

Bei Minus-Gläsern ist der Rand zwar dicker, aber auch hier ergeben sich deutliche Vorteile, wenn zum Spannen der äußere ringförmige Bereich erhalten bleibt.

Diese Art der Fertigung von Brillengläsern ist möglich, weil die Kunststoffrohlinge einen etwas größeren Durchmesser haben als bisher üblich und außerdem Fertigungsvorrichtungen eingesetzt werden, mit denen sich die gewünschte Geometrie auf der Oberfläche des Brillenglases herstellen läßt, ohne daß der ringförmige Bereich am äußeren Umfang des Werkstücks angeschnitten wird.

Zur weiteren sprachlichen Vereinfachung werden die angearbeiteten Kunststoffrohlinge im nachfolgendem Text als Werkstücke bezeichnet.

Dadurch, daß am äußeren Umfang des Werkstücks der genannte ringförmige Bereich in annähernd voller Dicke des Kunststoffrohlings erhalten bleibt, stehen während der gesamten Bearbeitung ideale Spannflächen zur Verfügung. Außerdem kann das Werkstück auf dem ringförmigen Bereich abgelegt werden. Das Vorhandensein dieser Spann- bzw. Ablageflächen in immer einheitlicher Größe und Form ist für alle weiteren Bearbeitungs- und Transportvorgänge ein sehr großer Vorteil, da die Werkzeuge und Vorrichtungen vereinheitlicht (standardisiert) werden können. Dies führt zu erheblichen Kosteneinsparungen.

Der ringförmige Bereich ist wegen seiner großen Dicke und auch wegen seiner Kreisringform mechanisch sehr stabil und daher in der Lage, das in seinem inneren Bereich fest mit ihm verbundene Brillenglas abzustützen. Dieses erhält dadurch die mechanische Stabilität, welche für die weitere Bearbeitung erforderlich ist. Dies gilt naturgemäß insbesondere für den Randbereich des Brillenglases.

Die mechanische Bearbeitung zur Erzeugung der gewünschten Oberflächengeometrie erfolgt erfindungsgemäß auf speziellen Fräs-/Drehmaschinen, mit denen sich sowohl die grobe Kontur der bearbeiteten Linsenseite durch Fräsen herstellen läßt als auch anschließend eine Feinbearbeitung der Oberfläche durch ein Drehverfahren möglich ist. Es ergibt sich dabei der sehr große Vorteil, daß sich die hohe Zerspanungsleistung des Fräsvorgangs mit der Feinbearbeitung beim Drehen kombinieren läßt. Es ist aber auch möglich die Oberflächengeometrie nur durch Fräsen herzustellen.

Bevor der Kunststoffrohling an seiner Vorder- und/oder Rückseite bearbeitet wird, werden an seinem äußeren Umfang zwei gegenüberliegende Abflachungen (ähnlich Schlüsselflächen) oder eine größere Kerbe angebracht, die zum Spannen und zur Definition der Achslage der ersten bearbeiteten Seite (vorzugsweise konkave Rückseite) dienen.

In der Nähe der einen Abflachung bzw. der größeren Kerbe wird außerdem eine kleinere Kerbe in den kreisrunden Umfang des Werkstücks eingefräst. Diese kleinere Kerbe ist relativ zu der einen Abflachung bzw. zu der größeren Kerbe um einige Winkelgrade (z. B. 60°) am Umfang versetzt angeordnet und wird als Indexierung (Kennzeichnung) für die zweite Brillenglasseite verwendet (vorzugsweise die konvexe Vorderseite).

Die Indexierung dient zur Definition des rechten und des linken Brillenglases und verhindert, daß das Werkstück bei der weiteren Bearbeitung irrtümlich um 180° verdreht wird.

Zur sprachlichen Vereinfachung wird im nachfolgenden Text nur auf die Abflachungen Bezug genommen. Gemeint sind aber immer auch die Ausführungen mit Kerben anstelle der Abflachungen.

Zum Fräsen der beiden Abflachungen wird der Kunststoffrohling auf der vorgenannten Fräs-/Drehmaschine aufgespannt. Da hierbei der Rand bearbeitet werden muß, verfügt das Spannwerkzeug (z. B. Spannzange) am Rand ebenfalls über Abflachungen, die etwas stärker ausgeprägt sind als diejenigen am Werkstück, so daß das am Rand gespannte Werkstück für die Bearbeitung hier zugänglich ist, ohne daß der Fräser das Spannwerkzeug berührt.

Zum Anfräsen der Indexierung bleibt das Werkstück am Umfang gespannt, wobei das Spannwerkzeug auch hier den entsprechenden Arbeitsbereich frei läßt.

Vorteilhafterweise wird das Herstellen der beiden Abflachungen und der Indexierung sowie der ersten Brillenglasfläche, wie beschrieben, in einer Aufspannung durchgeführt. Es kann zur Durchführung der genannten Arbeitsschritte jedoch auch umgespannt werden, wenn sich hieraus Vorteile ergeben.

Es ist auch möglich, die Abflachungen und/oder die Indexierung in Verbindung mit anderen, davor liegenden Arbeitsgängen herzustellen (z. B. beim Giessen oder Pressen der Halbfertigteile).

Zur Lagedefinition können anstelle der Abflachungen, Kerben und Indizes auch andere Markierungen und geometrische Formen am Umfang des Werkstücks oder am ringförmigen Bereich bzw. an der Vorder- oder Rückseite des Kunststoffrohlings angebracht werden. Insofern handelt es sich bei den vorstehend genannten Merkmalen nur um beispielhafte Darstellungen von bevorzugten Ausführungen.

Nach dem Bearbeiten der beiden Abflachungen, der Indexierung und der ersten Linsenseite (Fräsen und Drehen vorzugsweise in einer Aufspannung) wird die zweite, optisch aktive Seite des Werkstücks auf der Fräs-/Drehmaschine bearbeitet.

Zum Fräsen und Drehen der gewünschten Geometrie wird das Werkstück gewendet und am äußeren Umfang in einem zweiten Spannwerkzeug festgespannt. Die beiden Abflachungen und die Indexierung dienen dabei zum lagerichtigen Spannen des Werkstücks.

Das Spannwerkzeug besitzt zwei Formstücke, die sich an die Abflachungen anlegen und einen Bolzen, den die Indexierung umgreift, so daß stets eine lagerichtige Position des Werkstücks gegeben ist.

Die Phasenlage (Verdrehwinkel) von Spannwerkzeug mit Werkstückspindel ist in der Maschinensteuerung einprogrammiert. Am Spannwerkzeug selbst ist die Phasenlage durch die beiden Abflachungen und den Bolzen für die Indexierung definiert.

Die Bearbeitung der beiden Linsenoberflächen beginnt vorzugsweise mit der konkaven Linsenrückseite, falls diese nicht an dem Kunststoffrohling bereits vorhanden ist (Halbfertigteil).

Zur Bearbeitung der optisch aktiven Oberflächen der Linsen verfügen die erfindungsgemäßen Fräs-/Drehmaschinen in ihrem unteren Bereich über eine vertikal angeordnete Werkstückspindel, die drehzahl- und phasengesteuert rotatorisch angetrieben werden kann (C-Achse) und an ihrem oberen Ende über ein Spannwerkzeug zur Aufnahme des Werkstücks verfügt.

Gleichzeitig kann die Werkstückspindel schnelle axiale Bewegungen in der Z-Achse ausführen (Zustellbewegungen), was nötig ist, da die herzustellenden Oberflächengeometrien der Brillengläser üblicherweise nicht rotationssymetrisch sind und daher auf jedem Bearbeitungskreis räumliche Kurven abgefahren werden müssen. Es ist aber auch denkbar die Bearbeitung auf Maschinen durchzuführen, deren Werkstückspindel horizontal angeordnet ist.

In ihrem oberen Bereich verfügen die Fräs-/Drehmaschinen über eine Werkzeugspindel, die ebenfalls drehzahl- und phasengesteuert rotatorisch angetrieben werden kann (B-Achse). Die Werkzeugspindel trägt an ihrem vorderen Ende einen Werkzeugspeicher für die Drehwerkzeuge und in einigem Abstand davon das Fräswerkzeug auf koaxialer Welle.

Bei dem Fräswerkzeug handelt es sich um einen Walzenfräser mit einem großen Radius (senkrecht zur Rotationsachse) und einer kleineren Breite (in Richtung der Rotationsachse). Der Walzenfräser verfügt an seinem Umfang über halbrunde Schneidflächen, die einen kleinen Radius aufweisen. Anstelle des schmalen Walzenfräsers großen Durchmessers und kleiner Dicke, können auch Kugelfräser benutzt werden.

Der Radius der Drehwerkzeuge kann vorzugsweise eine ähnliche Abmessung wie derjenige an den Schneidflächen des Walzenfräsers haben.

Es ist auch vorgesehen, die z. B. ringförmigen Fräserschneiden des Walzenfräsers als Drehwerkzeuge zu benutzen. In diesem Fall kann ein separates Drehwerkzeug entfallen. Die Werkzeugschneiden haben in diesem Fall sowohl beim Fräsen als auch beim Drehen die gleiche Winkellage zum Werkstück. Winkelnachführbewegungen, wie später für die speziellen Drehwerkzeuge beschrieben, sind hier allerdings nicht möglich.

Die in der B-Achse gesteuert und rotatorisch angetriebene Werkzeugspindel befindet sich an einem Werkzeugschlitten, der in der X-Achse und als Besonderheit auch in der Y-Achse verfahren werden kann.

Während der Bearbeitung mit dem um die B-Achse rotierenden Fräser wird die Werkzeugspindel in der Y-Achse verfahren (Vorschubbewegungen), während sich das Werkstück um die C-Achse drehzahl- und phasengesteuert dreht und in Richtung der Z-Achse oszilliert. Diese Oszillation erfolgt in Abhängigkeit von der Drehzahl und Phasenlage des Werkstücks in der C-Achse sowie von der Position des Fräsers in der Y-Achse. Die Y-Achse, sowie die Z- und C-Achse sind hierzu in der Maschinensteuerung elektrisch miteinander verknüpft.

Die gewünschte Oberflächengeometrie wird durch das Zusammenwirken des Fräservorschubs in der Y-Achse mit den Bewegungen des Werkstücks in der Z- und C-Achse erzeugt.

Nach Abschluß des Fräsvorgangs (Fräser hat Zentrum des Brillenglases erreicht) werden die Werkzeugspindel und die Werkstückspindel so verfahren, daß eines der Drehwerkzeuge an dem Werkzeugspeicher in Eingriff mit dem Werkstück kommt.

Die Startposition des Drehwerkzeugs auf dem Werkstück ist dabei um 90° gegenüber derjenigen des Fräswerkzeugs versetzt, da auch die Schneiden des Fräsers bzw. der Drehwerkzeuge um 90° verdreht zueinander angeordnet sind.

Erfindungsgemäß können an dem Werkzeugspeicher für die Drehwerkzeuge verschiedene Schneidplatten aus unterschiedlichem Material und/oder mit verschiedenen Abmessungen, Schneidradien und Freiwinkeln angebracht werden. Dadurch ist es möglich den Werkzeugspeicher im Zusammenwirken mit der B-Achse als Werkzeugwechsler einzusetzen, indem das jeweils benötigte Werkzeug durch kurzes Verdrehen der B-Achse in die untere Position, d. h. in Arbeitsposition, gedreht wird.

Das Drehwerkzeug an der Werkzeugspindel wird dann entsprechend der Lage seiner Schneide in Richtung der X-Achse über das Werkstück bis zu dessen Zentrum bewegt (Vorschubbewegung), wobei die Werkstückspindel mit dem Werkstück wieder drehzahl- und phasengesteuert um die C-Achse rotiert und in Richtung der Z-Achse gesteuert oszilliert (Zustellbewegung).

Die Werkzeugspindel mit dem Drehwerkzeug kann während des Drehvorgangs in der B-Achse kleine Drehbewegungen (Winkelnachführbewegungen) ausführen, womit erreicht wird, daß das Drehwerkzeug beim Abfahren der Linsengeometrie mit seiner Hauptachse immer unter dem gleichen vorgegeben Winkel (z. B. rechter Winkel) zur Werkstückoberfläche steht.

Dies ist besonders vorteilhaft, wenn die Schneide des Drehwerkzeugs keine kreisrunde Form hat, sondern z. B. aus einer Diamantschneide besteht.

Die X- und Z-Achse, sowie die B- und C-Achse sind in der Maschinensteuerung elektrisch miteinander verknüpft, damit die vorgegebene Geometrie erzeugt werden kann. Bei bestimmten Drehwerkzeugen kann jedoch auch mit arretierter Werkzeugspindel gearbeitet werden. Die B-Achse ist dann nicht mit den anderen Achsen verknüpft.

Durch das Zusammenwirken vom Vorschub des Drehwerkzeugs in der X-Achse und den Bewegungen des Werkstücks in der Z- und C-Achse, sowie der Winkelnachführbewegung des Drehwerkzeugs in der B-Achse, wird die vorher durch Fräsen erzeugte Geometrie des Brillenglases im Feinbereich abgefahren und optimiert. Dabei wird eine sehr geringe Rauhtiefe an der Oberfläche erzeugt. Wenn das Drehwerkzeug das Zentrum des Werkstücks erreicht hat, ist der Arbeitsgang Drehen beendet.

Wenn die ringförmigen Schneiden des Walzenfräsers als Drehwerkzeug benutzt werden, so wird eine dieser Schneiden durch Drehen der Werkzeugspindel in der B-Achse in Arbeitsposition gebracht. Der Drehvorgang selbst läuft dann mit in der B-Achse arretierter Werkzeugspindel ab, die in diesem Fall entsprechend der Anordnung des Schneidwerkzeugs Vorschubbewegungen in der Y-Achse ausführt.

Das Werkstück führt auch hier wieder gesteuerte Bewegungen in der C- und Z-Achse aus. Bei der genannten Arbeitsweise mit den Frässchneiden sind die Y-Achse, sowie die Z- und C-Achse miteinander verknüpft.

Es ist prinzipiell auch möglich, auf den Arbeitsgang Drehen zu verzichten, wenn nach dem Fräsen bereits die gewünschte Oberflächenqualität erreicht ist, die für eine wirtschaftliche Bearbeitung durch Feinschleifen bzw. Polieren ausreicht.

Die Arbeitsgänge Fräsen und Drehen sind prinzipiell auch mit anderen Achskombinationen an der Bearbeitungsmaschine möglich.

Nach dem Fräsen und Drehen werden die Werkstücke auf Folgemaschinen zum Feinschleifen bzw. Polieren umgespannt, wobei wieder der äußere ringförmige Bereich zum Spannen benutzt wird. Die beiden Abflachungen und die Indexierung sorgen für eine lagerichtige Positionierung des Werkstücks in dem Spannwerkzeug.

Das Feinschleifen bzw. der Poliervorgang werden mit Formwerkzeugen insbesondere auch mit flexiblen Werkzeugen durchgeführt, die mit Schleifpads bzw. Polierfolie belegt sind. Die Formwerkzeuge müssen einen genauen Abdruck der Linsenoberfläche darstellen, was zu einem relativ großen Lagerbestand an teuren Formwerkzeugen führen würde, wenn nicht, wie hier vorgeschlagen, mit flexiblen Werkzeugen gearbeitet wird (vergleiche DE-A1-101 06 007).

Diese flexiblen Werkzeuge sind so konzipiert, daß sie sich mit ihrer Arbeitsfläche an die Linsenoberfläche andrücken lassen und dabei die geometrische Form der Linsenoberfläche annehmen. In einem nächsten Arbeitsschritt wird diese Form fixiert, so daß ein maßgenaues Formwerkzeug entsteht. Die Fixierung kann wieder aufgehoben werden, so daß praktisch beliebig viele Abformvorgänge durchgeführt werden können.

Das Feinschleifen oder Polieren mit den flexiblen Formwerkzeugen ist sehr kostengünstig, da es einerseits keinen großen Lagerbestand an teuren Formwerkzeugen erfordert und andererseits auch kein Logistikaufwand erforderlich ist. Dieser würde jedoch im Zusammenhang mit den herkömmlichen Formwerkzeugen entstehen, da das jeweilige Formwerkzeug der vorgegebenen Linsengeometrie zugeordnet werden müßte, was einen gezielten Zugriff auf das große Lager an Formwerkzeugen erforderlich macht.

Bei bestimmten Coating-Verfahren kann auf das Polieren verzichtet werden, wenn die beim Feinschleifen erzeugte Oberfläche eine genügend geringe Rauhtiefe hat. Die dann noch vorhandenen Unebenheiten werden beim Coating überdeckt.

Der grundsätzliche Fertigungsablauf (beide Seiten ohne fertige Oberflächen) stellt sich wie folgt dar:
1. Der Kunststoffrohling wird an der Werkstückspindel (C/Z-Achse) der Fräs-/Drehmaschine mittels Spannwerkzeug (Spannzange) am äußeren Rand festgespannt und die beiden Abflachungen und die Indexierung werden angebracht.
   Bei bestimmten Ausführungen ist auch vorgesehen, die Oberfläche des Kunststoffrohlings (Linsenrückseite) abzuplanen. Dies ergibt eine gute Auflage des Werkstücks beim Bearbeiten der Linsenvorderseite und eine genaue Lagedefinition (Höhenlage, Abstand) der Geometrien an Linsenvorder- und Linsenrückseite.
2. Anschließend wird in der gleichen Aufspannung vorzugsweise die konkave Linsenrückseite bearbeitet. Zum Fräsen und Drehen der gewünschten Geometrie, entsprechend Rezept, bleibt das Werkstück am äußeren Umfang in dem Spannwerkzeug festgespannt. Beim Fräsen und Drehen wird verfahren wie zuvor beschrieben.
   Bei dem Herstellen der Oberflächengeometrie an der Linsenrückseite gibt es keine Probleme mit dem Anschneiden des äußeren, ringförmigen Bereichs. Dies resultiert aus der konkaven Form der Linsenrückseite und der relativ flachen Wölbung von Brillengläsern. Es können so relativ große Brillengläser bearbeitet werden, ohne daß die Werkzeuge den ringförmigen Bereich anschneiden. In diesem Zusammenhang ist auch die geringfügige Vergrößerung des äußeren Durchmessers des Kunststoffrohlings von Vorteil.
3. Nach dem Herstellen der vorgegebenen Oberflächengeometrie an der Linsenrückseite wird diese feingeschliffen und ggf. poliert, wobei wie vorher beschrieben vorzugsweise flexible Formwerkzeuge zum Einsatz kommen.
4. Zum Schutz der fertig bearbeiteten Oberfläche wird diese zunächst gereinigt (z. B. mit Ultraschall) und anschließend mit einem Schutzlack oder einer Folie versehen.
5. Das Werkstück wird dann gewendet und erneut auf der Fräs-/Drehmaschine aufgespannt, damit die konvexe Linsenvorderseite zunächst durch Fräsen bearbeitet werden kann. Zum Spannen wird wieder der äußere Umfang des äußeren Randbereichs benutzt, wobei die Abflachungen für einen festen Halt und die Indexierung für eine lagerichtige Position sorgen. Die grobe Kontur wird durch Fräsen erzeugt, an das sich später ein Drehvorgang zur Feinbearbeitung der Linsenoberfläche anschließt. Beide Arbeitsgänge werden durchgeführt, wie bereits beschrieben und ergeben die gewünschte Oberflächengeometrie, entsprechend Rezept (Rezeptfertigung).
   Da der Fräser beim Bearbeiten der konvexen Linsenvorderseite im Randbereich des Werkstücks tief in das Material eintauchen muß, würde bei der herkömmlichen Bearbeitung der äußere, ringförmige Bereich des Werkstücks, der zum Spannen dient, weggefräst bzw. der Fräser würde mit dem Spannwerkzeug kollidieren.
   Dies gilt insbesondere im Zusammenhang mit der Dickenoptimierung bei Plus- bzw. Neutral-Gläsem.
   Damit der äußere, ringförmige Bereich zum Spannen des Werkstücks und zur Stabilisierung des eigentlichen Brillenglases im Innenbereich bei der weiteren Bearbeitung in annähernd voller Dicke erhalten bleibt, wird zu Beginn des Fräsvorgangs eine kreisförmige Rille am Rand des Werkstücks eingefräst. Diese Rille wird so plaziert und dimensioniert, daß einerseits im Außenbereich des Werkstücks der ringförmige Bereich erhalten bleibt und andererseits im Innenbereich die gewünschte Dicke am Rand des eigentlichen Brillenglases (im Rahmen der Dickenoptimierung) erreicht wird.
   Durch die Form des Fräswerkzeuges erhält die Rille einen Querschnitt mit einem Radius (im Querschnitt des Werkstücks gesehen), der mindestens demjenigen der Schneiden des Fräswerkzeugs entspricht. Da diese Rille außerhalb der eigentlichen Nutzfläche d. h. außerhalb des Brillenglases liegt, ist es zweckmäßig den genannten Radius möglichst klein zu halten, damit nicht unnötig Material zerspant werden muß bzw. verloren geht.
   Hieraus resultiert auch die Forderung nach einem Walzenfräser mit kleiner Dicke bzw. kleinem Radius an den Schneiden. Der Außendurchmesser des Kunststoffrohlings kann dann möglichst klein gehalten werden.
   Die Rille stellt den Übergang zwischen dem eigentlichen Brillenglas und dem äußeren, ringförmigen Bereich dar und ermöglicht durch ihre Form einerseits die geringe Dicke am Rand des eigentlichen Brillenglases und anderseits die große Dicke am ringförmigen Bereich.
   Der Fräsvorgang zum Herstellen der Geometrie an der Linsenvorderseite läuft dann so ab, daß das Werkstück mit der Werkstückspindel in der C-Achse rotiert (drehzahl-und phasengesteuert) und gleichzeitig in der Z-Achse der Spindel schnelle translatorische Bewegungen (Oszillation) ausführt, die als Zustellbewegungen dienen.
   Gleichzeitig wird der Walzenfräser mit der Werkzeugspindel in der Y-Achse gesteuert verfahren (Vorschubbewegungen), wobei er um die B-Achse der Werkzeugspindel mit konstanter Drehzahl rotiert (nicht gesteuert). Die Y-, Z- und C-Achse sind in der Maschinensteuerung so miteinander verknüpft, daß durch die Addition der Bewegungen zunächst die genannte Rille und anschließend die Oberflächengeometrie der Linsenvorderseite erzeugt wird.
6. An das Fräsen der Linsenvorderseite schließt sich ein Drehvorgang im Feinbereich an, mit dem im wesentlichen kleine Korrekturen an der Geometrie vorgenommen werden und vor allem die Rauhtiefe verbessert wird.
   Vor Arbeitsbeginn taucht das kreisrunde Drehwerkzeug in die genannte ringförmige Rille ein, deren Radius in etwa demjenigen des Werkzeugs entspricht. Dies erfolgt durch Verfahren der X-, Y-, Z- und B-Achse. Die Eintauchstelle ist zu derjenigen des Fräsers am Umfang des Werkstücks um 90° versetzt, wie es der Lage der Drehwerkzeuge an dem entsprechenden Werkzeugspeicher entspricht. Der Drehvorgang läuft dann wie vorher - unter 5. - für das Fräsen beschrieben ab.
   Wenn die Schneiden des Fräswerkzeugs als Drehwerkzeug benutzt werden, so läuft der Arbeitsgang Drehen ähnlich ab, wie der Fräsvorgang. In diesem Fall ist die Werkzeugspindel mit dem Werkzeug jedoch in der B-Achse festgesetzt, nachdem durch kleine Bewegungen in der B-Achse eine der Schneiden des Fräswerkzeugs in Arbeitsposition gedreht wurde. Die Vorschubbewegung findet wie beim Fräsen in der Y-Achse statt.
7. Nach dem Herstellen der vorgegebenen Oberflächengeometrie an der Linsenvorderseite erfolgt auf Folgemaschinen (Feinschleif- bzw. Poliermaschinen) das Feinschleifen und ggf. Polieren. Auch hier werden vorzugsweise flexible Formwerkzeuge eingesetzt. Gespannt wird das Werkstück wieder an dem äußeren, ringförmigen Bereich.
8. Nach den genannten mechanischen Bearbeitungsvorgängen erfolgt nochmals ein Reinigungsvorgang. Auch hierbei ist die standardisierte Form des Werkstücks mit gleichen Außendurchmessern (bedingt durch den äußeren, ringförmigen Bereich) von großem Nutzen, da die Haltevorrichtungen (Waschrahmen) stark vereinfacht und vor allen Dingen universell verwendbar konzipiert sein können. Die einheitliche Größe dieser Waschrahmen führt zu erheblichen Kosteneinsparungen.
   Anschließend wird im Randbereich der Linsenvorderseite eine Gravur angebracht, die für das Brillenglas die Position des Nahteils und die Achslage des Rezepts kennzeichnet und ggf. auch das Logo des Herstellers enthält.
9. Es folgt das Coating des Werkstücks, d. h. das Auftragen dünner Schichten zur Verbesserung der Gebrauchseigenschaften auf beiden Seiten. Auch hier ist der äußere, ringförmige Bereich wieder von großem Vorteil, da das Werkstück während des Coatings daran festgespannt oder darauf abgelegt werden kann. Der standardisierte Durchmesser des ringförmigen Bereichs reduziert die Vielzahl der früher benötigten Haltesysteme bzw. Abdeckmasken auf eine einzige Größe.
   Es ist weiterhin vorgesehen, sowohl die erste als auch die zweite Brillenglasseite in einem Arbeitsgang zu vergüten, wozu eine automatische Schwenkeinrichtung benutzt wird. Auch diese kostensparende Vorgehensweise bzw. Vorrichtung wird erst durch die einheitliche Größe und Form der Werkstücke ermöglicht.
10. Das Werkstück wird zum Trennen von Brillenglas und ringförmigem Bereich auf einer Fräsmaschine mittels des ringförmigen Bereichs aufgespannt und mit einem geeigneten Fräser (z. B. Fingerfräser kleinen Durchmessers) das Brillenglas von dem ringförmigen Bereich getrennt.
   Das Trennen von Brillenglas und ringförmigem Bereich kann jedoch auch mit anderen Bearbeitungsverfahren durchgeführt werden. In Frage kommt hier z. B. das sogenannte Waterjet-Verfahren, bei dem zum Schneiden ein sehr feiner Wasserstrahl mit hoher Geschwindigkeit benutzt wird.
   Beim Trennen des Brillenglases von dem ringförmigen Bereich wird vorzugsweise eine optimierte Außenkontur des Brillenglases erzeugt, die der vorgesehenen Brillenfassung weitgehend entspricht, daß heißt nur ein sehr geringes Aufmaß hat. Bei dem nachfolgendem Einschleifen in die Brillenfassung durch den Optiker wird hierdurch der Aufwand minimiert.
   Nach einer Endreinigung steht das Brillenglas für den Versand bereit.

Das erfindungsgemäße Verfahren weist zusammengefaßt folgende Vorteile auf:
■ Es ist eine blockfreie Fertigung möglich, so daß alle mit dem Aufblocken verbundene Nachteile vermieden werden.
■ Es werden keine teuren Spezialmaschinen mit Lasereinrichtungen benötigt. Wärmespannungen durch thermisches Schneiden oder Schweißen treten nicht auf.
■ Es ist Rezeptfertigung möglich.
■ Wegen der Spezialgeometrie an einer Linsenseite (vorzugsweise Vorderseite) kann auch bei Rezeptfertigung mit halbfertigen Kunststoffrohlingen (Halbfertigteile) in grober Abstufung gearbeitet werden. Daraus folgt eine Minimierung der Fertigungskosten (nur 1 Seite wird bearbeitet) und der Lagerkosten (wenig Halbfertigteile, da grobe Abstufung).
■ Die zur Durchführung des Verfahrens vorgeschlagene Fräs-/Drehmaschine kann durch Fortentwicklung von der Maschinentechnik abgeleitet werden, wie sie in der Optikmaschinen-Industrie bekannt ist.
■ Das Verfahren ist automatisierbar, da keine Arbeitsgänge erforderlich sind (z. B. Aufblocken), die Handeingriff erfordern.
■ Mit dem Verfahren lassen sich im Vergleich zum Stand der Technik Brillengläser mit deutlich besserer Qualität und optimierter Dicke herstellen. Daraus resultieren eine bessere Sehleistung und Verträglichkeit für den Brillenträger.
■ Das Verfahren ist sehr kostengünstig, da es mit deutlich weniger Arbeitsgängen auskommt, als dies bei den bekannten Verfahren der Fall ist.
■ Auch die Anzahl der Haltewerkzeuge und Vorrichtungen ist geringer, da die Werkstücke an dem standardisierten Durchmesser des ringförmigen Bereichs gespannt bzw. aufgelegt werden können.

In einer anderen Ausführungsform des erfindungsgemäßen Verfahrens, für die selbstständiger Schutz beansprucht wird, werden als Rohlinge Halbfertigteile benutzt, die mittels spanloser Formgebungsverfahren erzeugt werden. Bevorzugt werden Halbfertigteile aus Kunststoff, die in einem Gieß- oder Spritzgießverfahren hergestellt werden. Es sind jedoch auch Pressverfahren und Halbfertigteile aus Mineralglas vorgesehen.

Die konkave Linsenrückseite besitzt dabei bereits optische Qualität, die mit den spanlosen Formgebungsverfahren hergestellt wird und hat eine sphärische oder asphärische bzw. eine torische oder a-torische Oberfläche. Es sind jedoch grundsätzlich auch andere Oberflächenformen möglich.

Wichtig bei diesen material-optimierten Halbfertigteilen ist, daß sie im Randbereich der konkaven Linsenrückseite (mit optisch wirksamer Fläche) einen Formrand besitzen, der beim Herstellen des Halbfertigteils mittels spanloser Formgebungsverfahren mit angeformt wird. Der Formrand- hat, bezogen auf die konkave Linsenrückseite, einen deutlichen Überstand. Dieser Formrand hat bei den folgenden Bearbeitungsschritten die gleiche Funktion als Spannfläche wie der "äußere ringförmige Bereich", wie er bereits weiter oben beschrieben worden ist. Dieser wurde dort durch mechanische Bearbeitung auf der konvexen Linsenvorderseite erzeugt.

Wegen des Vorhandenseins des Formrandes an der konkaven Linsenrückseite als Spannfläche, ist das Erzeugen eines ringförmigen Bereichs durch mechanische Bearbeitung an der Linsenvorderseite hier nicht mehr notwendig, was sich günstig auf die Herstellkosten auswirkt.

Da sich bei dem erfindungsgemäßen Verfahren der Formrand an der konkaven Rückseite des Halbfertigteils befindet und dieses damit in den verschiedenen Bearbeitungsmaschinen festgespannt wird, kann die Linsenvorderseite frei bearbeitet werden, ohne daß ein störender Rand vorhanden ist. Dies ist ein erheblicher Vorteil.

Es lassen sich Kosten insbesondere beim Feinstschleifen und Polieren einsparen, da effektivere Werkzeuge benutzt werden können. Außerdem kann wegen der besseren Zugängigkeit der Linsenoberfläche beim Polieren eine bessere Oberflächenqualität erzeugt werden.

Der überstehende Formrand an der Linsenrückseite stört nicht, da hier keine Bearbeitung mehr stattfindet, denn die optische Qualität der Oberfläche wird dort bereits bei der spanlosen Formgebung des Halbfertigteils erzeugt. Vorgesehen sind hierfür bevorzugt Gieß- und Spritzgießverfahren sowie Pressverfahren.

Aus Gründen der sprachlichen Vereinfachung wird nachstehend nur noch von Halbfertigteilen aus Kunststoff gesprochen, die mittels Gieß- bzw. Spritzgießverfahren hergestellt werden. Gemeint sind jedoch immer auch alle anderen Verfahren zur spanlosen Formgebung, soweit diese geeignet sind (wie z.B. Pressverfahren) und auch Halbfertigteile aus Mineralglas.

Die Vorderseite des Halbfertigteils kann der zu erzeugenden Linsengeometrie bereits grob angepasst werden. Es ergibt sich dadurch eine Materialersparnis und weniger Zerspanungsaufwand.

Der Formrand bleibt bei allen Bearbeitungsschritten erhalten und dient zum Ablegen und Spannen des Werkstücks. Durch seine Breite, Höhe und Ringform ist er sehr stabil und stützt bei allen Bearbeitungsschritten die in seinem Innenbereich entstehende und mit ihm verbundene Linse ab.

Da das Werkstück den Formrand bis zum letzten Arbeitsgang behält, besteht auch hier der große Vorteil, daß alle Spannwerkzeuge standardisiert (vereinheitlich) werden können und das Werkstück ohne Aufblocken oder aufwendige Laserbehandlung gespannt und bearbeitet werden kann. Eine Deformation des Linsenteils durch die Zerspanungskräfte findet wegen der Stützfunktion des Formrands nicht statt.

An dem Formrand befindet sich, falls erforderlich, auch eine angegossene Aussparung (Markierung), mit der die Achse der durch den Gießvorgang fertiggestellten Linsenrückseite definiert ist. Zum Herstellen von Kunststoff-Halbfertigteilen werden Glasformen (Glasmoulds) verwendet, die erfindungsgemäß so gestaltet sind, daß eine einfache Entformung möglich ist. Zur Herstellung von Halbfertigteilen aus Mineralglas werden Stahlformen benutzt.

Die benutzten Maschinen und Werkzeuge entsprechen denjenigen, wie sie bereits weiter oben beschrieben worden sind. Sie werden bei dem nachfolgend dargestellten Verfahren lediglich durch Gießmaschinen und neuartige Gießwerkzeuge ergänzt.

Das Gießwerkzeug besteht aus einer Hinterform und einer Vorderform, sowie einem Dichtring am Umfang, der beide Formhälften miteinander verbindet. Neu bei diesem Gießwerkzeug ist die Gestaltung der Hinterform, die nicht, wie bisher üblich aus einer einfachen gewölbten Scheibe besteht, sondern im Randbereich einen Absatz aufweist; mit dem der genannte Formrand an dem Halbfertigteil angeformt wird.

Dieser Absatz wird bevorzugt mit einer Schräge ausgeführt, was das Ausformen erleichtert. Im Bereich dieser Schräge ist auch eine "Nase" vorhanden, mit der die genannte Markierung erzeugt wird.

Die beim Gießen wirksame Oberfläche der Vorderform kann eben sein oder der zu erzeugenden konvexen oder konkaven Linsenvorderseite grob entsprechen, ohne daß dabei jedoch eine optisch wirksame Oberfläche entsteht.

Die beim Gießen wirksame Oberfläche der Hinterform ist so gestaltet, daß sie die vorgenannten Oberflächengeometrien erzeugen kann. Die durch den Gießvorgang hergestellte Oberfläche ist optisch wirksam und bei Ausführung mit torischer oder a torischer Geometrie in 0,5 bis 1 dpt abgestuft. Die Anpassung der erzeugten Linse an das Brillenrezept (Rezeptfertigung) erfolgt durch eine entsprechende Bearbeitung der Linsenvorderseite.

Durch die relativ grobe Abstufung der Hinterform von 0,5 bis 1 dpt reduziert sich die Anzahl der erforderlichen Formen ganz erheblich. Durch das Bearbeiten der Linsenvorderseite ist dennoch eine Rezeptfertigung möglich (siehe oben).

Der Verfahrensablauf gestaltet sich wie folgt:

Auf an sich bekannten Fertigungseinrichtungen werden mittels des neuartigen Gießwerkzeugs die Halbfertigteile hergestellt. Diese bestehen bevorzugt aus Kunststoff, es können jedoch auch Halbfertigteile aus Mineralglas hergestellt werden.

Die Halbfertigteile werden dann in den Werkstückhaltern herkömmlicher Bearbeitungsmaschinen mittels ihres Formrandes festgespannt und die Vorderseiten mittels dieser Maschinen durch Fräsen, Drehen, Schleifen, Feinstschleifen und Polieren bearbeitet. Wenn es sich bei der herzustellenden Linse um ein Brillenglas handelt, so wird bei den ersten Stufen dieser mechanischen Bearbeitung eine Dickenoptimierung der Linse durchgeführt.

Das heißt, die Brillenfassung ist bekannt und das Brillenglas wird bezüglich seiner Dicke auf diese Fassung abgestimmt. Brillengläser, die in der Mitte dicker als am Rand sind (Plus-Gläser), werden so bearbeitet, daß sie im Bereich der späteren Fassung nur eine Dicke aufweisen die in etwa dem Rand der Fassung entspricht. Brillengläser, die in der Mitte dünner als am Rand sind (Minus-Gläser), werden so bearbeitet, daß die Mitte mit Rücksicht auf ihre Festigkeit so dünn wie möglich gestaltet wird. Dadurch werden Brillengläser erzeugt, die das geringst mögliche Gewicht ausweisen.

Die Geometrie der konvexen Linsenvorderseite wird bei der Herstellung von Brillengläsern so gestaltet, daß sie in Kombination mit der konkaven Linsenrückseite optische Wirkungen ergibt, die dem Rezept entspricht, das der Fertigung zu Grunde liegt.

An die mechanischen Bearbeitungsvorgänge schließen sich das Coating und das Markieren der optischen Achse an. Der Formrand bleibt bei allen genannten Arbeitsgängen erhalten und dient zum Spannen oder Auflegen des Werkstücks in den verschiedenen Maschinen und Vorrichtungen.

Erst nach dem Coating und dem Markieren wird das eigentliche Brillenglas von dem Formrand abgetrennt. Hierzu wird das Werkstück an seinem Rand an der Werkstückspindel einer Fräsmaschine gespannt und die innere Kontur des Brillenglases mittels eines Fingerfräsers kleinen Durchmessers ausgeschnitten. Für dieses Ausschneiden sind jedoch auch andere Verfahren vorgesehen. So kann z.B. eine Waterjet benutzt werden.

In einer weiteren Ausführungsform, für die selbständiger Schutz beansprucht wird, werden als Rohlinge Halbfertigteile benutzt, die mittels spanloser Formgebungsverfahren erzeugt werden. Bevorzugt werden Halbfertigteile aus Kunststoff, die in einem Gieß- oder Spritzgießverfahren hergestellt werden. Es sind jedoch auch Pressverfahren und Halbfertigteile aus Mineralglas vorgesehen.

Die konvexe Linsenvorderseite besitzt dabei bereits optische Qualität, die mit den spanlosen Formgebungsverfahren hergestellt wird. Diese Vorderseite hat eine sphärische oder asphärische Oberfläche mit Dioptriensprüngen von z. B. ¼ dpt. Es sind jedoch grundsätzlich auch andere Oberflächenformen möglich. Auch bifokale Flächen und Gleitsichtflächen sind vorgesehen.

Neu bei diesen material-optimierten Halbfertigteilen ist, daß sie im Randbereich der konvexen Linsenvorderseite (mit optisch wirksamer Oberfläche) einen Formrand besitzen, der beim Herstellen des Halbfertigteils mittels spanloser Formgebungsverfahren mit angeformt wird.

Der Formrand hat, bezogen auf die konvexe Linsenvorderseite, einen deutlichen Überstand. Dieser Formrand dient bei den folgenden Bearbeitungsschritten zum Spannen des Werkstücks (Halbfertigteils) in den Spannwerkzeugen der Bearbeitungsmaschinen und stabilisiert das entstehende Brillenglas im Randbereich da er bis zum letzten Bearbeitungsschritt erhalten bleibt.

Da sich bei dem erfindungsgemäßen Verfahren der Formrand an der konvexen Vorderseite des Halbfertigteils befindet und dieses damit in den verschiedenen Bearbeitungsmaschinen festgespannt wird, kann die Linsenrückseite frei bearbeitet werden, ohne daß ein störender Rand vorhanden ist. Dies ist ein erheblicher Vorteil.

Es lassen sich Kosten insbesondere beim Feinstschleifen und Polieren einsparen, da effektive Werkzeuge benutzt werden können. Außerdem kann wegen der unbehinderten Zugängigkeit der Linsenoberfläche beim Polieren eine gute Oberflächenqualität erzeugt werden.

Der überstehende Formrand an der konvexen Linsenvorderseite stört nicht, da hier keine Bearbeitung mehr stattfindet, denn die optische Qualität der Oberfläche wird dort bereits bei der spanlosen Formgebung des Halbfertigteils erzeugt. Vorgesehen sind hierfür bevorzugt Gieß- und Spritzgießverfahren sowie Pressverfahren.

Aus Gründen der sprachlichen Vereinfachung wird nachstehend nur noch von Halbfertigteilen aus Kunststoff gesprochen, die mittels Gieß- bzw. Spritzgießverfahren hergestellt werden. Gemeint sind jedoch immer auch alle anderen Verfahren zur spanlosen Formgebung, soweit diese geeignet sind (wie z.B. Pressverfahren) und auch Halbfertigteile aus Mineralglas.

Bei der spanlosen Formgebung kann die konkave Rückseite des Halbfertigteils der zu erzeugenden Linsengeometrie bereits grob angepasst werden. Es ergibt sich dadurch eine Materialersparnis und weniger Zerspanungsaufwand. Allerdings steigt hierdurch die Anzahl der vorzuhaltenden Halbfertigteile und damit auch die Lagerkosten.

Der Formrand bleibt bei allen Bearbeitungsschritten erhalten und dient zum Ablegen und Spannen des Werkstücks. Durch seine Breite, Höhe und Ringform ist er sehr stabil und stützt bei allen Bearbeitungsschritten die in seinem Innenbereich entstehende und mit ihm verbundene Linse ab.

Da das Werkstück den Formrand bis zum letzten Arbeitsgang behält, besteht der große Vorteil, daß alle Spannwerkzeuge standardisiert (vereinheitlich) werden können und das Werkstück ohne Aufblocken oder aufwendige Laserbehandlung gespannt und bearbeitet werden kann. Eine Deformation des Linsenteils durch die Zerspanungskräfte findet wegen der Stützfunktion des Formrands nicht statt.

An dem Formrand befindet sich, falls erforderlich, auch eine angegossene Aussparung (Markierung), mit der die Achse der durch den Gießvorgang fertiggestellten Linsenvorderseite definiert ist: Zum Herstellen von Kunststoff-Halbfertigteilen werden bevorzugt Glasformen (Glasmoulds) verwendet, die erfindungsgemäß so gestaltet sind, daß eine einfache Entformung möglich ist. Zur Herstellung von Halbfertigteilen aus Mineralglas werden Stahlformen benutzt.

Die benutzten Maschinen und Werkzeuge entsprechen dem Stand der Technik. CNCgesteuerte Maschinen und die entsprechenden Spezialwerkzeuge werden nicht benötigt. Es können vielmehr alle Maschinen und Werkzeuge weiter benutzt werden, die im Zusammenhang mit dem bisher üblichen Aufblock-Verfahren eingesetzt wurden und bei den Herstellern vorhanden sind.

Auch die bei den Herstellern im Zusammenhang mit dem Aufblockverfahren eingeführten Rezepturen und Maschineneinstellungen zur Bearbeitung der konkaven Linsenrückseite können weiter benutzt werden. Da die Werkstücke an dem Formrand gespannt werden, entfällt aber in jedem Fall das teure und umweltschädliche Aufblocken.

Zur Durchführung des erfindungsgemäßen Verfahrens werden bei den Herstellern der Brillengläser oder bei ihren Unterlieferanten lediglich die neuartigen Gießwerkzeuge zur Herstellung der Halbfertigteile benötigt. Diese können auf den vorhandenen Gießmaschinen benutzt werden.

Das Gießwerkzeug besteht aus einer Hinterform und einer Vorderform sowie einem Dichtring am Umfang, der beide Formhälften miteinander verbindet. Neu bei diesem Gießwerkzeug ist die Gestaltung der Vorderform, die nicht, wie bisher üblich aus einer einfachen, nach innen gewölbten Scheibe besteht, sondern im Randbereich einen Absatz aufweist, mit dem der genannte Formrand an dem Halbfertigteil angeformt wird. Dieser Absatz wird bevorzugt mit einer Schräge ausgeführt, was das Ausformen erleichtert. Im Bereich dieser Schräge kann auch eine "Nase" vorhanden sein, mit der die vorstehend genannte Markierung erzeugt wird.

Die Oberfläche der Hinterform kann eben sein oder der zu erzeugenden Linsenrückseite grob entsprechen, ohne daß damit jedoch eine optisch wirksame Oberfläche erzeugt werden kann.

Die beim Gießvorgang wirksame Oberfläche der Vorderform ist so gestaltet, daß sie die benötigten Oberflächengeometrien erzeugen kann. Die durch den Gießvorgang hergestellte Oberfläche der Linsenvorderseite ist optisch wirksam und beider üblichen Ausführung mit sphärischer oder asphärischer bzw. torischer oder atorischer Geometrie z. b. in 0,25 dpt abgestuft. Diese durch Gießen hergestellte Linsenvorderseite kann auch bifokale Flächen oder Gleitsichtflächen aufweisen. Die weitere Anpassung der zu erzeugenden Linse an das Brillenrezept erfolgt durch eine entsprechende Bearbeitung der Linsenrückseite.

Der Verfahrensablauf ist dann wie folgt:

Auf an sich bekannten Fertigungseinrichtungen werden mittels des neuartigen Gießwerkzeugs die Halbfertigteile hergestellt. Diese bestehen bevorzugt aus Kunststoff, es können jedoch auch Halbfertigteile aus Mineralglas hergestellt werden.

Die Halbfertigteile werden dann in den Werkstückhaltern herkömmlicher Bearbeitungsmaschinen mittels ihres Formrandes festgespannt und die konkave Rückseite mittels dieser Maschinen durch Fräsen, Drehen, Schleifen, Feinstschleifen und Polieren bearbeitet.

Aufwendige mehrachsige CNC-Maschinen können zwar eingesetzt werden, sind jedoch nicht Voraussetzung zur Durchführung des erfindungsgemäßen Verfahrens, da nur relativ einfache Geometrien hergestellt werden müssen, wie z. B. sphärische oder asphärische bzw. torische oder atorische Oberflächen ohne bifokale Flächenelemente. Die kompliziertere Geometrie mit bifokalen Flächen bzw. Gleitsichtflächen befindet sich in diesem Fall an der konvexen Linsenvorderseite, die durch spanlose Formgebungsverfahren hergestellt wurde.

Wenn es sich bei der herzustellenden Linse um ein Brillenglas handelt, so wird bei den ersten Stufen dieser mechanischen Bearbeitung eine Dickenoptimierung der Linse durchgeführt.

Das heißt, die Brillenfassung ist bekannt und das Brillenglas wird bezüglich seiner Dicke auf diese Fassung abgestimmt. Brillengläser, die in der Mitte dicker als am Rand sind (Plus-Gläser), werden so bearbeitet, daß sie im Bereich der späteren Fassung nur eine Dicke aufweisen die in etwa dem Rand der Fassung entspricht. Brillengläser, die in der Mitte dünner als am Rand sind (Minus-Gläser), werden so bearbeitet, daß die Mitte mit Rücksicht auf ihre Festigkeit so dünn wie möglich gestaltet wird. Dadurch werden Brillengläser erzeugt, die das geringst mögliche Gewicht ausweisen.

Die Geometrie der konkaven Linsenrückseite wird bei der Herstellung von Brillengläsern so gestaltet, daß sie in Kombination mit der bereit vorhandenen konvexen Linsenvorderseite die gewünschte optische Wirkungen ergibt, die dem Rezept entspricht, das der Fertigung zu Grunde liegt.

An die mechanischen Bearbeitungsvorgänge schließen sich das Coating und das Markieren der optischen Achse an. Der Formrand bleibt bei allen genannten Arbeitsgängen erhalten und dient zum Spannen oder Auflegen des Werkstücks in den verschiedenen Maschinen und standardisierten Vorrichtungen.

Erst nach dem Coating und dem Markieren wird das eigentliche Brillenglas von dem Formrand abgetrennt. Hierzu wird das Werkstück mit seinem Formrand an der Werkstückspindel einer Fräsmaschine gespannt und die innere Kontur des Brillenglases mittels eines Fingerfräsers kleinen Durchmessers ausgeschnitten. Für dieses Ausschneiden sind jedoch auch andere Verfahren vorgesehen. So kann z.B. ein Waterjet benutzt werden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen.Es zeigen:
- Fig. 1: das Herstellen der beiden Abflachungen (3) und (4) auf der Fräs-/Drehmaschine in einer Ansicht und einer Draufsicht (Schnittdarstellungen),
- Fig. 2: das Herstellen der Indexierung (15) auf der Fräs-/Drehmaschine in einer Ansicht und einer Draufsicht (Teilschnitte),
- Fig. 3a: den Fertigungszustand des Werkstücks (16) nach den Fertigungsschritten entsprechend Abb. 1 und 2 mit den Abflachungen (3) und (4) sowie der Indexierung (15),
- Fig. 3b: alternativ den Fertigungszustand des Werkstücks (16), wenn statt der Abflachungen (3) und (4), eine größere Kerbe (35) und die Indexierung (15) angebracht wurden,
- Fig. 4: das Herstellen der Oberflächengeometrie an der konkaven Linsenrückseite (27) mittels Walzenfräser (9) auf der Fräs-/Drehmaschine in einer Ansicht und einer Draufsicht (Schnittdarstellungen),
- Fig. 5: das Herstellen der Oberflächengeometrie im Feinbereich und das Glätten der Oberfläche mittels Drehwerkzeug (12) an der konkaven Linsenrückseite (27) in einer Ansicht und einer Draufsicht (Schnittdarstellungen),
- Fig. 6: das Feinschteifen bzw. Polieren der konkaven Linsenrückseite (27) auf einer Feinschleif- bzw. Poliermaschine in einer Ansicht (Schnittdarstellung) und einer Draufsicht. Das Schleif- bzw. Polierwerkzeug ist nicht dargestellt, da nicht Gegenstand des vorgeschlagenen Verfahrens,
- Fig. 7: das Herstellen der Oberflächengeometrie an der konvexen Linsenvorderseite (19) mittels Walzenfräser (9) auf der Fräs-/Drehmaschine am Arbeitsende in einer Ansicht und einer Draufsicht (Schnittdarstellungen) sowie eine Ausschnittvergrößerung vom Randbereich des geschnittenen Werkstücks (16),
- Fig. 8a: das Herstellen der Oberflächengeometrie im Feinbereich und das Glätten der Oberfläche an der konvexen Linsenvorderseite (19) mittels Drehwerkzeug (12) auf der Fräs-/Drehmaschine in einer Ansicht und einer Draufsicht (Schnittdarstellungen) am Arbeitsende,
- Fig. 8b: das Herstellen der Oberflächengeometrie an der konvexen Linsenvorderseite (19) mittels Drehwerkzeug (12.1) auf der Fräs-/Drehmaschine mit Winkelnachführbewegungen in der B-Achse in einer Ansicht (Schnittdarstellungen),
- Fig. 9: das Feinschleifen bzw. Polieren der konvexen Linsenvorderseite (19) auf einer Feinschleif- bzw. Poliermaschine in einer Ansicht (Schnittdarstellung) und einer Draufsicht. Das Feinschleif- bzw. Polierwerkzeug ist nicht dargestellt, da nicht Gegenstand des vorgeschlagenen Verfahrens,
- Fig. 10a: den Fertigungszustand des Werkstücks (16) nach den Fertigungsschritten entsprechend Abb. 1 bis 9 bei einem Plus-Glas (Querschnitt und Draufsicht),
- Fig. 10b: den Fertigungszustand des Werkstücks (16) nach den Fertigungsschritten entsprechend Abb. 1 bis 9 bei einem Neutral-Glas (Querschnitt),
- Fig. 10c: den Fertigungszustand des Werkstücks (16) nach den Fertigungsschritten entsprechend Abb. 1 bis 9 bei einem Minus-Glas (Querschnitt),
- Fig. 11a: eine Gießwerkzeug in Schnittdarstellung,
- Fig. 11b: die Hinterform in Schnittdarstellung und in Draufsicht,
- Fig. 12a: das Halbfertigteil vor der Bearbeitung in Schnittdarstellung, in einen Werkstückhalter eingespannt und

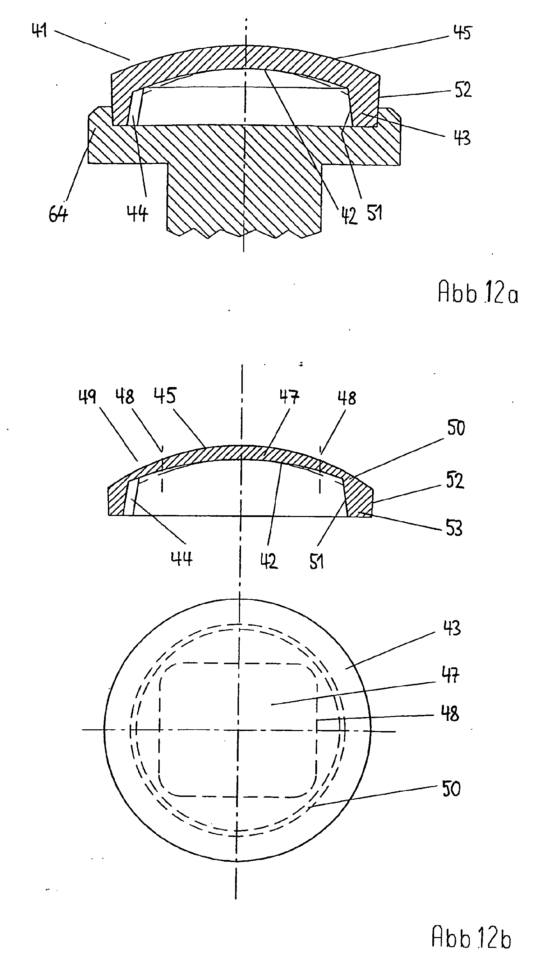

- Fig. 12a: das Werkstück nach der Bearbeitung der konvexen Linsenvorderseite in Schnittdarstellung und in Draufsicht

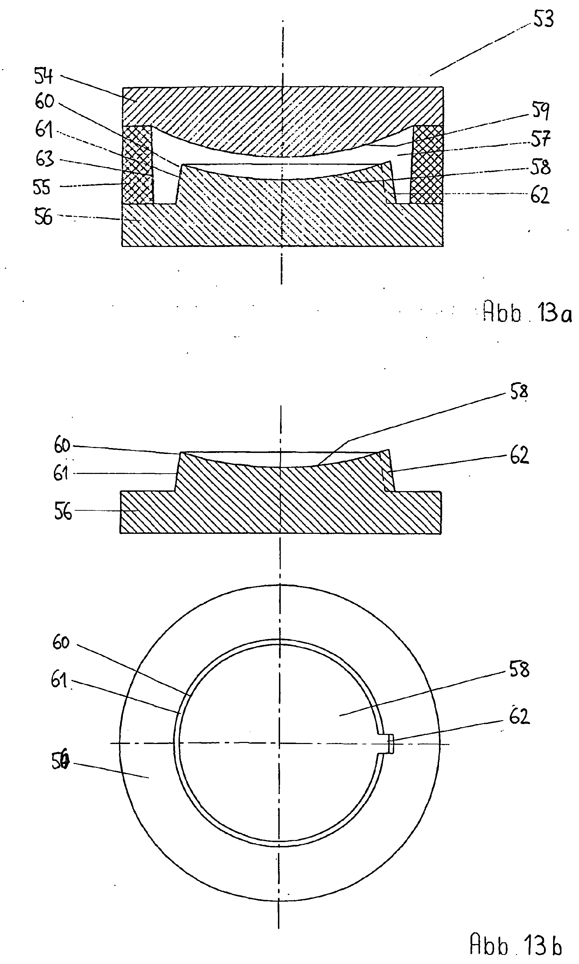

- Fig. 13a: eine Gießwerkzeug in Schnittdarstellung,
- Fig. 13b: die Hinterform in Schnittdarstellung und in Draufsicht,

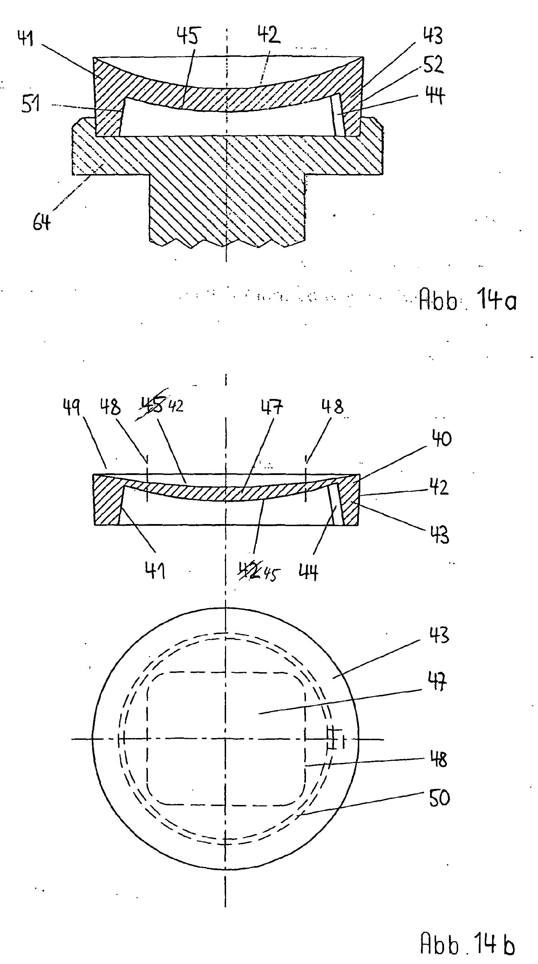

- Fig. 14a: das Halbfertigteil vor der Bearbeitung in Schnittdarstellung, in einen Werkstückhalter eingespannt,
- Fig. 14a: das Werkstück nach der Bearbeitung der konvexen Linsenvorderseite in Schnittdarstellung und in Draufsicht und

Bei dem vorliegenden Beispiel zu Variante 1 des ersten Ausführungsbeispiels wird von einem Kunststoffrohling ausgegangen, dessen Vorderseite eben ist, während seine Rückseite eine Einformung ohne fertige Oberfläche aufweist. Es handelt sich bei diesem Beispiel um eine von mehreren vorgesehenen Verfahrens- und Vorrichtungsvarianten im Zusammenhang mit Plus-Gläsern. Für Neutral- und Minus-Gläser gilt sinngemäß jedoch genau das Gleiche.

In den Vorrichtungs-Abbildungen werden die Maschinen selbst nicht dargestellt, sondern lediglich ihre Werkzeug- und Werkstückspindeln mit den daran befestigten Bearbeitungs- und Spannwerkzeugen. Diese Vereinfachungen wurde gewählt, damit die Details der erfindungsgemäßen Vorrichtungen besser gezeigt werden können.

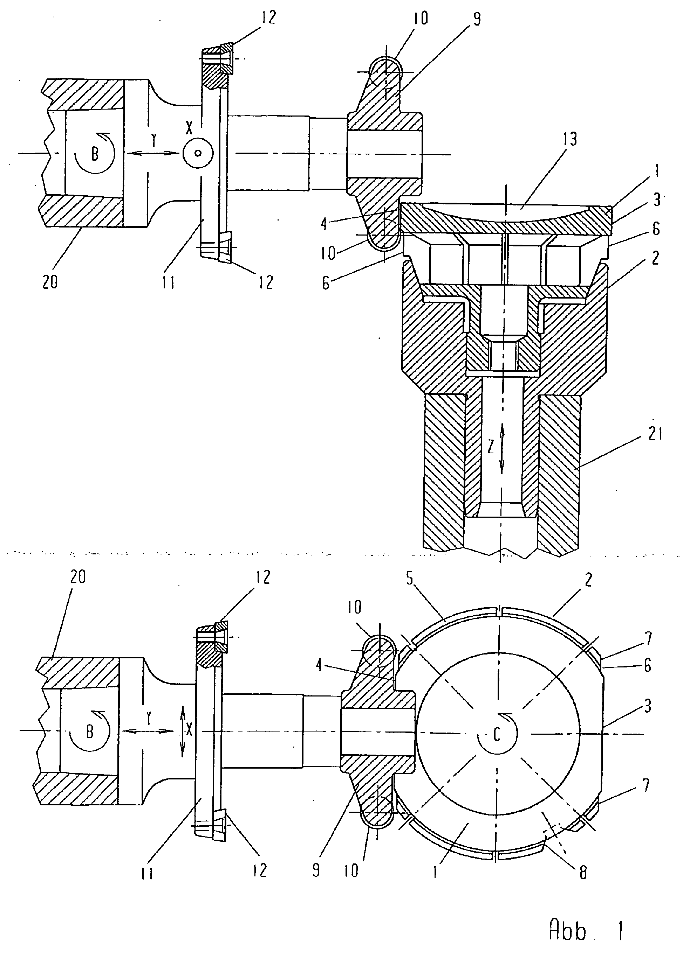

Fig. 1 zeigt das Herstellen der beiden Abflachungen 3 und 4 auf der Fräs-/Drehmaschine in einer Ansicht und einer Draufsicht (Schnittdarstellungen).

Der Kunststoffrohling 1 ist in einem Spannwerkzeug 2 festgespannt, welches mit der Werkstückspindel 21 der Fräs-/Drehmaschine in Verbindung steht.

Die Werkstückspindel 21 führt bei diesem Bearbeitungsschritt in der Z-Achse translatorische Bewegungen (Zustellbewegungen) aus, während sie in der C-Achse nur kurze Drehbewegungen ausführt (180°), wenn die erste Abflachung 3 fertig gestellt ist und die zweite Abflachung 4 gefräst werden soll.

Wie Fig. 1 zeigt, sind seitlich an den Spannwerkzeugen 2 zwei Ausnehmungen 6 vorhanden, die das Bearbeiten des Kunststoffrohlings 1 in diesen beiden Bereichen erlauben, so daß die Abflachungen 3 und 4 gefräßt werden können. Der Spann- und Zentrierrand 5 des Spannwerkzeugs 2 endet daher an den Kanten 7 und weist eine weitere Ausnehmung 8 für das spätere Fräsen der Indexierung auf.

Für das Fräsen der beiden Abflachungen 3 und 4 wird ein Walzenfräser 9 benutzt, der an seinem Umfang Frässchneiden 10 mit relativ kleinem Durchmesser (z. B. 11 mm) aufweist, da er später auch für das Herstellen der Oberflächengeometrie von Linsenvorder und -rückseite benutzt wird.

Der Walzenfräser 9 ist gemeinsam mit dem erst später benötigten Werkzeugspeicher 11 für die Drehwerkzeuge 12, an der Werkzeugspindel 20 befestigt. Die Werkzeugspindel 20 führt translatorische Bewegungen in der X-Achse (Vorschub) und kontinuierliche Rotationsbewegungen in der B-Achse aus.

Der Fräsvorgang zum Herstellen der beiden Abflachungen 3 und 4 läuft wie üblich ab. Das Arbeiten mit der Fräs-/Drehmaschine in diesem Zusammenhang hat den großen Vorteil, daß die Polarkoordinaten der Abflachungen 3 und 4, sowie ihre Abmessungen in der Maschinensteuerung bereits sehr genau bekannt sind und für alle weiteren Fräs- und Drehvorgänge benutzt werden könnten.

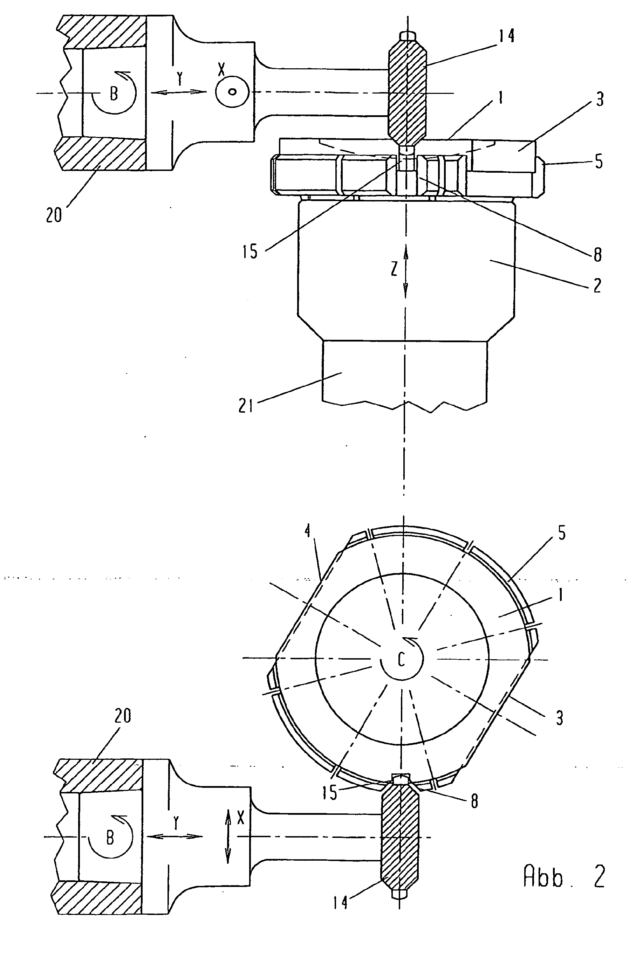

Fig. 2 zeigt das Herstellen der Indexierung 15 auf der Fräs-/Drehmaschine in einer Ansicht und einer Draufsicht.

Die Bearbeitung wird wieder auf der Fräs-/Drehmaschine durchgeführt, wobei der Kunststoffrohling 1 in dem gleichen Spannwerkzeug 2 festgespannt bleibt, wie vorher bei Fig. 1 beschrieben.

Die Bearbeitung mit einem Walzenfräser 14 kann stattfinden, wenn der Kunststoffrohling 1, durch kurzes Verfahren der Werkstückspindel 21 in der C-Achse, in die Bearbeitungsposition gedreht wurde und sich der Walzenfräser 14 durch Verfahren in der X- und Y-Achse in der richtigen Lage befindet. Während der Bearbeitung rotiert der Walzenfräser 9 kontinuierlich um die B-Achse und wird in der X-Achse verfahren (Zustellbewegungen).

Der Walzenfräser 14 greift durch die Ausnehmung 8 im Spann- und Zentrierrand 5 des Spannwerkzeugs 2 hindurch und erzeugt an dem Kunststoffrohling 1 die Indexierung 15 in Form einer Nut.

In Fig. 2 ist ein spezieller Walzenfräser 14 dargestellt. Es ist jedoch auch möglich, die Indexierung 15 mit dem Walzenfräser 9 herzustellen, der für die anderen Arbeitsschritte benutzt wird. Dies hätte den Vorteil, daß kein Werkzeugwechsel erforderlich ist.

Der Kunststoffrohling 1 mit den beiden Abflachungen 3 und 4, sowie der Indexierung 15 wird bei der Beschreibung der folgenden Arbeitsschritte als Werkstück 16 bezeichnet. Diese Bezeichnung wird auch beibehalten, wenn weitere Bearbeitungen durchgeführt wurden.

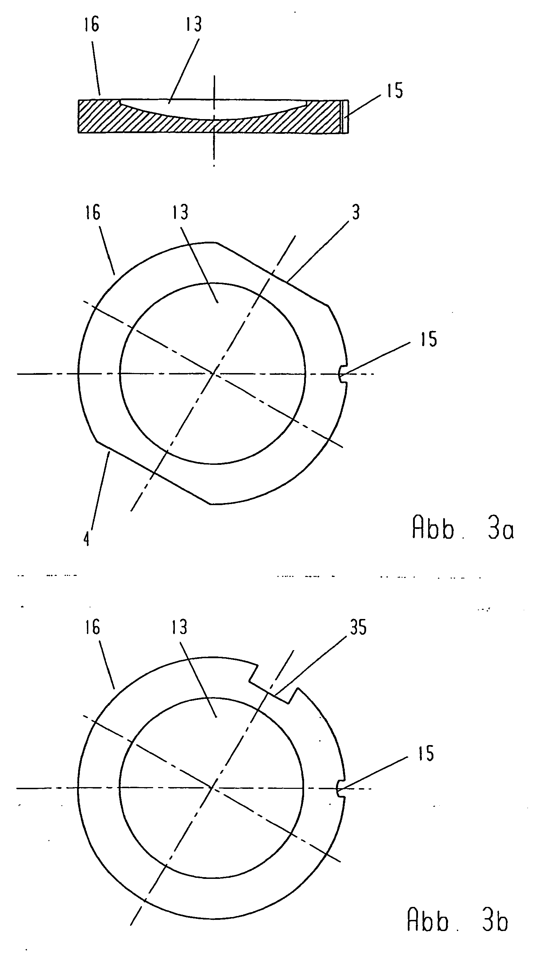

Fig. 3a zeigt den Fertigungszustand des Werkstücks 16 nach den Fertigungsschritten entsprechend Fig. 1 und 2.

In beiden Darstellungen ist die Indexierung 15 zu erkennen. In der unteren Darstellung mit Blick auf die Einformung 13 erkennt man zusätzlich die beiden Abflachungen 3 und 4. Damit ist die Lage des Werkstücks 16 eindeutig definiert. Die Einformung 13 an der Linsenrückseite ist noch nicht bearbeitet.

Fig. 3b zeigt alternativ den Fertigungszustand des Werkstücks 16, wenn statt der Abflachungen 3 und 4, eine größere Kerbe 35 und die Indexierung 15 angebracht wurden.

In der Draufsicht mit Blick auf die Einformung 13 sind die Kerbe 35 und die Indexierung 15 zu erkennen, die am Umfang versetzt angeordnet sind und dabei einen Winkel von weniger als 90° zueinander einschließen. Damit ist die Lage des Werkstücks 16 eindeutig definiert.

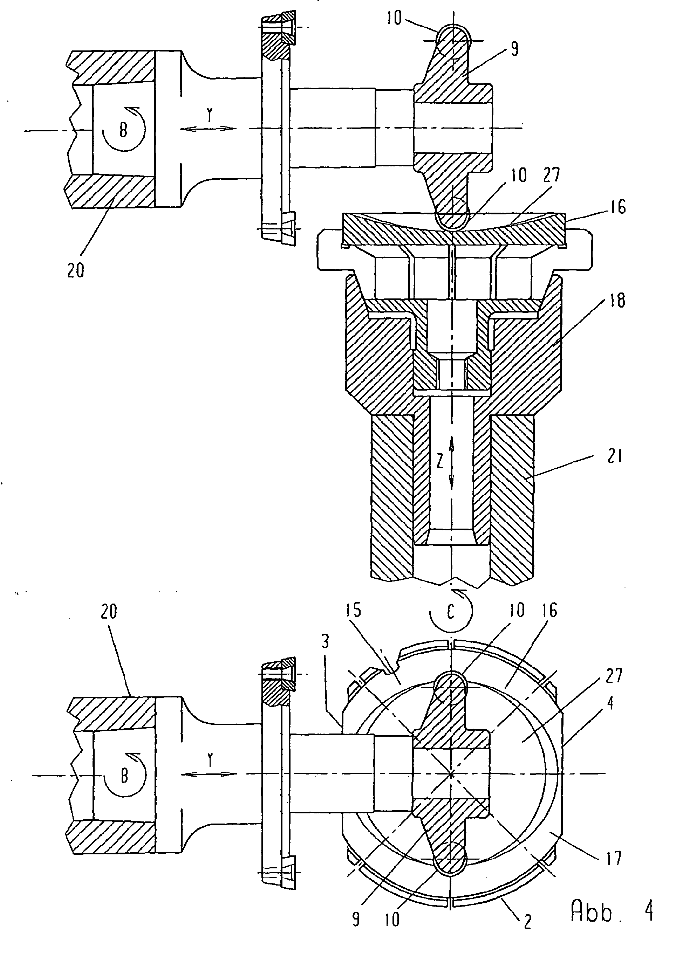

Fig. 4 zeigt das Herstellen der Oberflächengeometrie an der konkaven Linsenrückseite 27 mittels Walzenfräsers 9 auf der Fräs-/Drehmaschine in einer Ansicht und einer Draufsicht (Schnittdarstellungen).

Die Bearbeitung wird wie bei den vorhergehenden Arbeitsgängen auf der Fräs-/Drehmaschine mit dem Walzenfräser 9 durchgeführt. Das Werkstück 16 ist mit der Werkstückspindel 21 über das Spannwerkzeug 18 verbunden. Die Bearbeitung der Oberflächengeometrie erfolgt in der gleichen Aufspannung, wie sie auch bei der Herstellung der Abflachungen 3 und 4 bzw. der Indexierung 15 vorgesehen war. Dies ermöglicht eine optimale Lagenpräzision zwischen konkaver Linsenrückseite 27 und der Indexierung 15.

Während der Bearbeitung rotiert das Werkstück 16 kontinuierlich in der C-Achse mit gesteuerter Drehzahl und Phasenlage. Gleichzeitig führt es in der Z-Achse translatorische Bewegungen aus, die als Zustellbewegungen dienen. Diese Bewegungen in der Z-Achse laufen mit hoher Dynamik in Form von Oszillationen ab.

Der Walzenfräser 9 ist an der Werkzeugspindel 20 befestigt und rotiert kontinuierlich in der B-Achse. Gleichzeitig wird er mit der Werkzeugspindel 20 in der Y-Achse verfahren. Die Addition der Bewegungen von Werkstück 16 und Walzenfräser 9 ergibt die gewünschte Oberfläehengeometrie an der konkaven Linsenrückseite 27.

Die Bearbeitung zum Fräsen der vorgegebenen Geometrie an der konkaven Linsenrückseite 27 beginnt am Rand des Werkstücks 16 und ist beendet, wenn der Walzenfräser 9 dessen Zentrum erreicht hat.

Grundsätzlich kann jede der hier genannten Bearbeitungen (Fräsen und Drehen) jedoch auch in Linsenmitte beginnen und am äußeren Rand enden.

Damit das Erzeugen der gewünschten Geometrie möglich ist, sind bei dieser Bearbeitung die Y-, Z- und C-Achse miteinander verknüpft. Die Rotation des Walzenfräsers 9 um die B-Achse erfolgt ohne Verknüpfung. In der Abbildung ist das Werkstück 16 am Ende dieses Bearbeitungsschrittes dargestellt.

Nach dieser Bearbeitung wird am Randbereich der konkaven Linsenrückseite des Werkstücks 16 eine Planfläche 17 erzeugt, die als Auflage dient, wenn das Werkstück 16 zum Bearbeiten der konvexen Linsenvorderseite gewendet und neu gespannt wird.

Die Planfläche 17 ermöglicht eine eindeutige Bestimmung der relativen Höhenlage sowohl der konkaven Linsenrückseite 27, als auch der konvexen Linsenvorderseite 19, in Bezug auf die Planfläche 17 des Werkstücks 16 und ermöglicht eine genaue Definition der Linsendicke.

Dies ist bei der Herstellung eines dickenoptimierten Brillenglases sehr wichtig, damit später beim Bearbeiten der konvexen Linsenvorderseite 19 die Höhenlage in Richtung der Dicke des Werkstücks 16 gesehen der konkaven Linsenrückseite 27 genau bekannt ist.

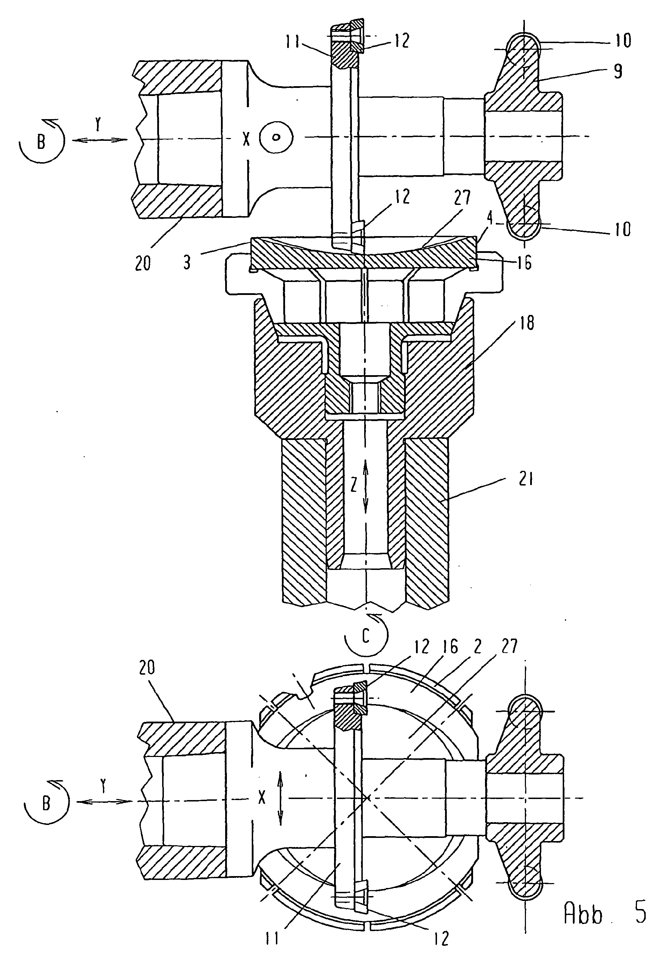

Fig. 5 zeigt das Herstellen der Oberflächengeometrie im Feinbereich und das Glätten der Oberfläche mittels Drehwerkzeug 12 an der konkaven Linsenrückseite 27 in einer Ansicht und einer Draufsicht (Schnittdarstellungen).

Für diese Bearbeitung wird die Werkzeugspindel 20 mit dem Werkzeugspeicher 11 für die Drehwerkzeuge 12 in der B-Achse um einige Winkelgrade gedreht, bis sich das gewünschte Drehwerkzeug 12 in der Bearbeitungs-Startposition befindet.

Die B-Achse der Werkzeugspindel 20 wird dann in einen gesteuerten Zustand umgeschaltet, bei dem sie kleine Drehbewegungen ausführen kann, die den Anstellwinkel der Hauptachse des Drehwerkzeugs 12 relativ zur Oberfläche des Werkstücks 16 nachführen (= Winkelnachführbewegungen).

Anschließend wird die Werkzeugspindel 20 in der X- und Y-Achse so verfahren, daß dieses Drehwerkzeug 12 in die Startposition oberhalb des Werkstücks 16 kommt.

Diese Startposition des Drehwerkzeugs 12 am Rand des Werkstücks 16 ist dabei in der Draufsicht um 90° gegenüber derjenigen des Walzenfräsers 9 verdreht, da auch die Schneiden 10 des Walzenfräsers 9 bzw. die Schneiden der Drehwerkzeuge 12 um 90° verdreht zueinander angeordnet sind.

Die Werkstückspindel 21 mit dem Werkstück 16 wird dann in der C-Achse in kontrollierte Rotation versetzt (Drehzahl und Phasenlage gesteuert) und gleichzeitig in der Z-Achse translatorisch nach oben bewegt bis das Drehwerkzeug 12 in Kontakt mit dem Werkstück 16 kommt.

Das Drehwerkzeug 12 an der Werkzeugspindel 20 wird dann entsprechend der Lage seiner Schneide in Richtung der X-Achse über das Werkstück 16 bis zu dessen Zentrum bewegt Vorschubbewegung, wobei die Werkstückspindel 21 mit dem Werkstück 16 wieder drehzahl- und phasengesteuert um die C-Achse rotiert und in Richtung der Z-Achse oszilliert (Zustellbewegungen).

Die Werkzeugspindel 20 mit dem Drehwerkzeug 12 führt während des Drehvorgangs in der B-Achse die genannten kleinen Drehbewegungen (Winkelnachführbewegungen) : aus, womit erreicht wird, daß die Hauptachse des Drehwerkzeugs 12 beim Abfahren der Linsengeometrie immer unter dem vorgegebenen, gleichen und optimalen relativen Schnittwinkel (z. B. rechter Winkel) zur Werkstückoberfläche steht (in diesem Fall zur konkaven Linsenrückseite 27).

Dies ist besonders vorteilhaft, wenn die Schneide des Drehwerkzeugs (12) keine kreisrunde Form hat, sondern z. B. aus einer Diamantschneide besteht. Ohne die Winkelnachführbewegungen in der B-Achse würde sich der relative Schnittwinkel wegen der dreidimensionalen Linsengeometrie ständig verändern.

Die Winkelnachführbewegungen des Drehwerkzeugs 12 in der B-Achse erfolgen gesteuert und in Abhängigkeit von den Stellungen der X-, Z- und C-Achse, wenn (wie in diesem beispielhaften Fall) die Vorschubbewegung des Drehwerkzeugs 12 in der X-Achse erfolgt.

Mit den Winkelnachführbewegungen in der B-Achse könnte der Anstellwinkel des Drehwerkzeugs 12 auch ständig relativ zur Oberfläche des Werkstücks 16 variiert werden, wenn dies im speziellen Fall erforderlich sein sollte und ein Konstanthalten dieses Anstellwinkels nicht zweckmäßig ist.

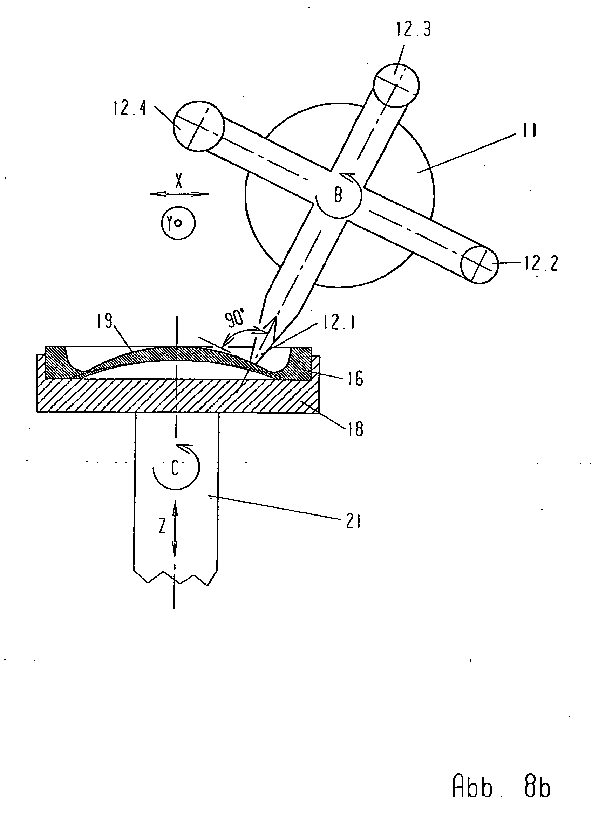

Nähere Erläuterungen zu den Winkelnachführbewegungen ergeben sich aus Fig. 8b im Zusammenhang mit der Bearbeitung der konvexen Linsenvorderseite 19.

Die X- und die Z- Achse, sowie die B- und C-Achse sind in der Maschinensteuerung elektrisch miteinander verknüpft, damit der vorbeschriebene Bewegungsablauf möglich ist.

Durch das Zusammenwirken der Bewegungen des Drehwerkzeugs 12 in der X- und B-Achse und der Bewegungen des Werkstücks 16 in der Z- und C-Achse, wird die vorher durch Fräsen erzeugte Geometrie an der konkaven Linsenrückseite 27 im Feinbereich abgefahren und dabei eine sehr geringe Rauhtiefe an der Oberfläche erzeugt. Wenn das Drehwerkzeug 12 das Zentrum des Werkstücks 16 erreicht hat, ist der Arbeitsgang Drehen beendet.

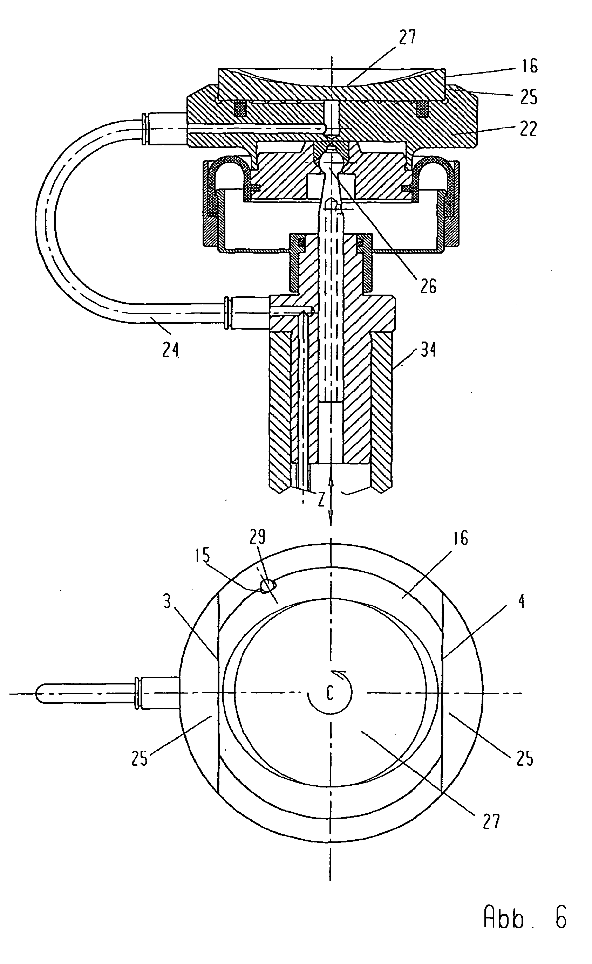

Fig. 6 zeigt das Feinschleifen bzw. Polieren der konkaven Linsenrückseite 27 auf einer Feinschleif- bzw. Poliermaschine in einer Ansicht Schnittdarstellung und einer Draufsicht. Das Feinschleif- bzw. Polierwerkzeug ist nicht dargestellt, da nicht Gegenstand des vorgeschlagenen Verfahrens.

Das Werkstück 16 ist zum Feinschleifen bzw. Polieren in das Unterdruck-Spannwerkzeug 22 einer Feinschleif- bzw. Poliermaschine eingelegt, wobei die beiden Abflachungen 3 und 4 eine zusätzliche Verdrehsicherung darstellen. An diese legen sich entsprechende Formstücke 25 im Bereich der Oberseite des Unterdruck-Spannwerkzeugs 22 an. Dies hat den Vorteil, daß mit höherem Schleif- bzw. Polierdruck gearbeitet werden kann ohne daß das Werkstück 16 dabei verrutscht.

Der Unterdruck wird dem Unterdruck-Spannwerkzeug 22 über Luftführungen in der Werkstückspindel 34 der Feinschleif- bzw. Poliermaschine und eine Schlauchverbindung 24 zugeführt. Der obere Teil des Unterdruck-Spannwerkzeugs 22 ist mittels eines Kugelgelenks 26 kardanisch gelagert.

Der Feinschleif- bzw. Poliervorgang findet entsprechend dem Stand der Technik statt, indem die Werkstückspindel 34 mit dem Werkstück 16 rotiert und sich ein Formwerkzeug (vorzugsweise flexibles Formwerkzeug), das an der Werkzeugspindel befestigt ist (beide nicht gezeichnet), auf die feinzuschleifende bzw. zu polierende Fläche des Werkstücks 16 aufsetzt und ebenfalls rotierende Bewegungen um die Werkzeugachse ausführt.

Das Feinschleif- bzw. Polierwerkzeug ist mit einem Schleifpad bzw. einer Polierfolie belegt und der Feinschleif- bzw. Poliervorgang läuft unter Zugabe von Suspension ab. Durch eine leichte Schrägstellung der Werkzeugspindel relativ zu der Werkstückspindel 34 wird eine kleine Relativbewegung zwischen Feinschleif- bzw. Polierwerkzeug und Werkstück 16 erreicht, die das Schleifen bzw. Polieren bewirkt.

Als Feinschleif- bzw. Polierwerkzeug wird vorzugsweise das erwähnte flexible Werkzeug eingesetzt, da sich hiermit erhebliche Werkzeugkosten einsparen lassen. Auf den Feinschleif- bzw. Poliervorgang wird hier nicht weiter eingegangen, da er nicht Gegenstand des vorgeschlagenen Verfahrens ist.

Wichtig ist im Zusammenhang mit Fig. 6 jedoch das Spannen des Werkstücks 16 sowohl unter Benutzung der beiden Abflachungen 3 und 4 im Zusammenwirken mit den Formstücken 25 als auch unter Benutzung der Indexierung 15 im Zusammenwirken mit dem Bolzen 29.

Nach dem Feinschleifen bzw. Polieren wird die fertige Oberfläche der konkaven Linsenrückseite 27 gereinigt z.B. mit Ultraschall und mit einem Schutzlack versehen, damit sie bei der weiteren Bearbeitung des Werkstücks 16 nicht beschädigt wird.

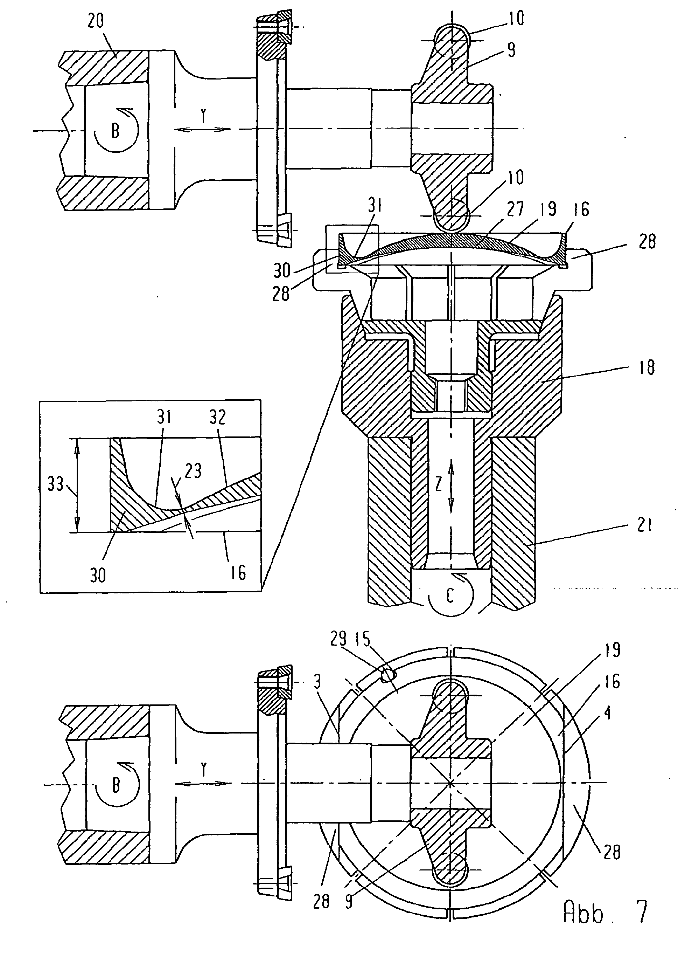

Fig.7 zeigt das Herstellen der Oberflächengeometrie an der konvexen Linsenvorderseite 19 mittels Walzenfräser 9 auf der Fräs-/Drehmaschine in einer Ansicht und einer Draufsicht (Schnittdarstellungen) am Arbeitsende, sowie eine Ausschnittsvergrößerung vom Randbereich des geschnittenen Werkstücks 16.

Das Werkstück 16 wird erneut auf der Fräs-/Drehmaschine aufgespannt, damit die konvexe Linsenvorderseite 19 zunächst durch Fräsen bearbeitet werden kann. Zum Spannen wird wieder der äußere Umfang benutzt, wobei die beiden Abflachungen 3 und 4 und die Indexierung 15 für die lagerichtige Position sorgen.

Die beiden Abflachungen 3 und 4 werden außerdem zum Spannen benutzt, wozu Spannelemente 28 dienen, die mit dem Spannwerkzeug 18 verbunden sind und sich an die beiden Abflachungen 3 und 4 anlegen und für festen Halt sorgen. Für die Aufnahme der Indexierung 15 dient ein Bolzen 29, der ebenfalls mit dem Spannwerkzeug 18 verbunden ist und genau zu der Indexierung 15 paßt, die ihn teilweise umschließt. Bei diesem Arbeitsgang ist ein fester Halt des Werkstücks 16 in dem Spannwerkzeug 18 besonders wichtig, da sehr viel Zerspanung mit dem Walzenfräser 9 durchgeführt werden muß.

Die grobe Kontur der Oberflächengeometrie an der konvexen Linsenvorderseite 19 wird durch Fräsen erzeugt. Dieser Arbeitsgang wird durchgeführt, wie im Zusammenhang mit der konkaven Linsenrückseite 27 bereits beschrieben. Die erzeugte Oberftächengeometrie kann beliebig gestaltet werden und entspricht dem vorgegebenen Rezept (Rezeptfertigung) im Zusammenwirken mit der konkaven Linsenrückseite 27.

Die Bearbeitung der konvexen Linsenvorderseite 19 mit dem Walzenfräser 9 beginnt wieder am äußeren Umfang und endet wenn das Werkzeug das Zentrum des Werkstücks 16 durch Vorschub in der Y-Achse erreicht hat. Der Walzenfräser 9 muß wegen der konvexen Form der Linsenvorderseite 19 im Randbereich des Werkstücks 16 zunächst tief in das Material eintauchen, damit hier die geringe Wanddicke 23 im Randbereich der Linse, im Rahmen der Dickenoptimierung, erreicht werden kann. Hierzu wird die Werkstückspindel 21 in der Z-Achse entsprechend verfahren (Zustellbewegung).

Auch dieser Arbeitsgang kann mit umgekehrtem Werkzeugvorschub durchgeführt werden, wobei das Werkzeug von der Mitte des Werkstücks 16 zu dessen Rand geführt würde.

Da der äußere, ringförmige Bereich 30 erhalten bleiben soll dient zum Spannen und zur Aussteifung der Linse, setzt die Zustellbewegung zwischen Walzenfräser 9 und Werkstück 16 erst ein, wenn der Walzenfräser 9 durch Verfahren in der Y-Achse die vorgegebene Position über dem Werkstück 16 erreicht hat. Diese Position wird so gewählt, daß der Abstand des Walzenfräsers 9 zum äußeren Umfang des Werkstück 16 genügend groß ist, um beim Erreichen der geringen Wanddicke 23 den ringförmigen Bereich 30 in der gewünschten Größe zu erhalten.

Zu Beginn des Fräsvorgangs entsteht im Zusammenhang mit der Erzeugung der geringen Wanddicke 23 und bei Erhaltung des ringförmigen Bereichs 30 mit großer Dicke 33 eine kreisförmige Rille 31 am Rand des Werkstücks 16.

Durch die Form des Walzenfräsers 9 erhält die kreisförmige Rille 31 im Querschnitt einen Radius, der mindestens demjenigen der Frässchneiden 10 des Walzenfräsers 9 entspricht.

Die kreisförmige Rille 31 stellt den Übergang zwischen dem eigentlichen Brillenglas 32 und dem äußeren, ringförmigen Bereich 30 dar und ermöglicht durch ihre Form einerseits die geringe Dicke 23 am Rand des Brillenglases 32 und anderseits die große Dicke 33 am ringförmigen Bereich 30.

Nach dem Herstellen der geringen Wanddicke 23 läuft der weitere Fräsvorgang zum Herstellen der Geometrie an der konvexen Linsenvorderseite 19 dann so ab, daß das Werkstück 16 mit der Werkstückspindel 21 in der C-Achse weiter rotiert drehzahl- und phasengesteuert und gleichzeitig in der Z-Achse der Werkstückspindel 21 schnelle translatorische Bewegungen (Oszillationen) ausführt, die als Zustellbewegungen dienen.

Gleichzeitig wird der Walzenfräser 9 mit der Werkzeugspindel 20 in der Y-Achse gesteuert verfahren Vorschubbewegung, wobei er um die B-Achse der Werkzeugspindel 20 mit konstanter Drehzahl rotiert nicht gesteuert. Die Y-, Z- und C-Achse sind in der Maschinensteuerung so miteinander verknüpft, daß durch die Addition der Bewegungen zunächst die genannte Rille 31 und anschließend die Oberflächengeometrie der konvexen Linsenvorderseite 19 erzeugt wird. Wenn der Walzenfräser 9 das Zentrum des Werkstücks 16 erreicht hat, ist der Fräsvorgang beendet.

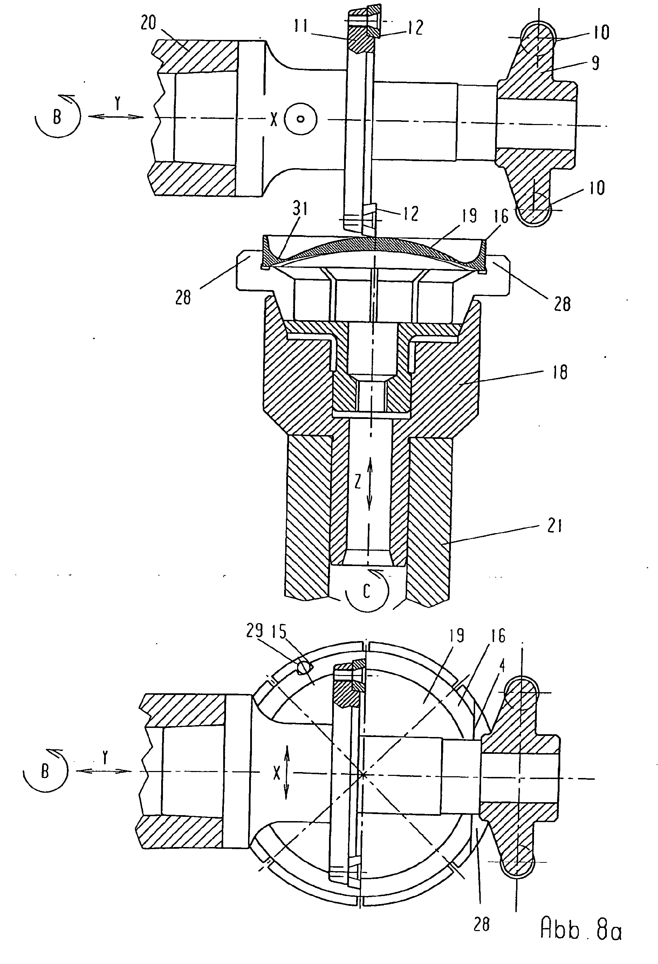

Fig. 8a zeigt das Herstellen der Oberflächengeometrie im Feinbereich und das Glätten der Oberfläche an der konvexen Linsenvorderseite 19 mittels Drehwerkzeug 12 auf der Fräs-/Drehmaschine in einer Ansicht und einer Draufsicht (Schnittdarstellungen) am Arbeitsende.

Für diese Bearbeitung wird die Werkzeugspindel 20 mit dem Werkzeugspeicher 11 für die Drehwerkzeuge 12 in der B-Achse um einige Winkelgrade gedreht, bis sich eines der Drehwerkzeuge 12 in der Bearbeitungs-Startposition befindet. Anschließend wird die Werkzeugspindel 20 in der X- und Y-Achse so verfahren, daß dieses Drehwerkzeug 12 in die Startposition oberhalb des Werkstücks 16 kommt.

Diese Startposition des Drehwerkzeugs 12 am Rand des Werkstücks 16 ist analog zu derjenigen, wie für Fig. 5 bereits beschrieben.

Die Werkstückspindel 21 mit dem Spannwerkzeug 18 und dem Werkstück 16 wird dann in der C-Achse in kontrollierte Rotation versetzt Drehzahl und Phasenlage gesteuert und gleichzeitig in der Z-Achse translatorisch nach oben bewegt, bis das Drehwerkzeug 12 im Bereich der kreisförmigen Rille 31 in Kontakt mit dem Werkstück 16 kommt.

Das Drehwerkzeug 12 an der Werkzeugspindel 20 wird dann entsprechend der Lage seiner Schneide in Richtung der X-Achse über das Werkstück 16 bis zu dessen Zentrum bewegt Vorschubbewegung, wobei die Werkstückspindel 21 mit dem Werkstück 16 weiter drehzahl- und phasengesteuert um die C-Achse rotiert und in Richtung der Z-Achse oszilliert (Zustellbewegungen).

Während des Drehvorgangs und der Vorschubbewegung des Drehwerkzeugs 12 in der X-Achse, führt es gleichzeitig die vorerwähnten Winkelnachführbewegungen in der B-Achse aus, mit denen der relative Anstellwinkel zwischen der Hauptachse des Drehwerkzeugs 12 und der Werkstückoberfläche (hier der konvexen Linsenvorderseite 19) konstant gehalten wird.

Die X- und Z-Achse sowie die B- und C-Achse sind in der Maschinensteuerung elektrisch miteinander verknüpft, damit der gewünschte Bewegungsablauf möglich ist.

Durch das Zusammenwirken der Bewegungen des Drehwerkzeugs 12 in der X- und B-Achse und der Bewegungen des Werkstücks 16 in der Z- und C-Achse, wird die vorher durch Fräsen erzeugte Geometrie des Werkstücks 16 an seiner konvexen Linsenvorderseite 19 im Feinbereich abgefahren und dabei auch hier eine sehr geringe Rauhtiefe an der Oberfläche erzeugt. Wenn das Drehwerkzeug 12 das Zentrum des Werkstücks 16 erreicht hat, ist der Arbeitsgang Drehen beendet.

Fig.8b zeigt das Herstellen der Oberflächengeometrie an der konvexen Linsenvorderseite 19 mittels Drehwerkzeug 12.1 auf der Fräs-/Drehmaschine mit Winkelnachführbewegungen in der B-Achse in einer Ansicht (Schnittdarstellungen).

Mit dieser stark vereinfachten Fig. 8b wird der Arbeitsgang Drehen mit Winkelnachführbewegungen näher erläutert und die Funktion des Werkzeugspeiches 11 dargestellt.

Das Werkstück 16 befindet sich in einem Spannwerkzeug 18, das mit der Werkstückspindel 21 verbunden ist und führt die bereits mehrfach erwähnten, gesteuerten Zustellbewegungen in der Z-Achse und gesteuerten Rotationsbewegungen in der C-Achse aus.

Die Bearbeitung durch Drehen findet an der konvexen Linsenvorderseite 19 des Werkstücks 16 statt, unter Benutzung eines Drehwerkzeugs 12.1, das an einem Werkzeugspeicher 11 befestigt ist, wobei die Hauptachse des Drehwerkzeugs 12.1 in der Fig. 8b rechtwinklig zur Oberfläche des Werkstücks 16 steht.

In dem Maße, wie das Drehwerkzeug 12.1 durch die Vorschubbewegung in der X-Achse über die Oberfläche der konvexen Linsenvorderseite 19 bewegt wird, führt der Werkzeugspeicher 11 mit dem Drehwerkzeug 12.1 Winkelnachführbewegungen in der B-Achse aus, so daß der genannte rechte Winkel zwischen der Hauptachse des Drehwerkzeugs 12.1 und der Werkstückoberfläche erhalten bleibt.

An dem Werkzeugspeicher 11 sind die Drehwerkzeuge 12.1 bis 12.4 befestigt. Vor dem eigentlichen Arbeitsgang Drehen, kann eines der Drehwerkzeuge 12.1 bis 12.4 in die Bearbeitungs-Startposition gedreht werden, wie dies den fertigungstechnischen Anforderungen entspricht. Zum Anwählen eines der gewünschten Drehwerkzeuge 12.1 bis 12.4 wird die Werkzeugspindel 20 mit dem Werkzeugspeicher 11 in der B-Achse entsprechend verdreht.

Die in der Abbildung dargestellten Drehwerkzeuge 12.1 bis 12.4 haben unterschiedliche Durchmesser. Es können selbstverständlich auch Drehwerkzeuge 12.1 bis 12.4 mit anderen Unterscheidungsmerkmalen und in anderer Stückzahl an dem Werkzeugspeicher 11 befestigt sein.

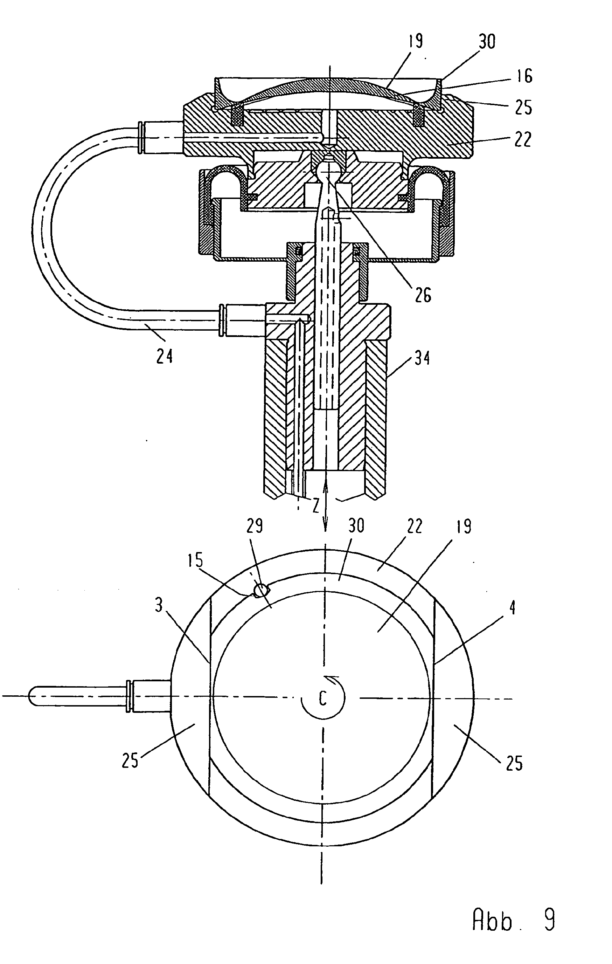

Fig. 9 zeigt das Feinschleifen bzw. Polieren der konvexen Linsenvorderseite 19 auf einer Feinschleif- bzw. Poliermaschine in einer Ansicht (Schnittdarstellung) und einer Draufsicht. Das Feinschleif- bzw. Polierwerkzeug ist nicht dargestellt, da nicht Gegenstand des vorgeschlagenen Verfahrens.

Das Werkstück 16 ist zum Feinschleifen bzw. Polieren wieder in das Unterdruck-Spannwerkzeug 22 an der Werkstückspindel 34 einer Feinschleif- bzw. Poliermaschine eingelegt, wobei die beiden Abflachungen 3 und 4 eine zusätzliche Verdrehsicherung sind. An diese legen sich entsprechende Formstücke 25 im Bereich der Oberseite des Unterdruck-Spannwerkzeugs 22 an.

Der Aufbau der Feinschleif- bzw. Poliereinrichtung und der Feinschleif- bzw. Poliervorgang sind ähnlich, wie bei Fig. 6 bereits beschrieben.

Als Feinschleif bzw. Polierwerkzeug wird wieder vorzugsweise das erwähnte flexible Werkzeug eingesetzt, da sich hiermit auch bei diesem Arbeitsgang erhebliche Werkzeugkosten einsparen lassen. Auf den Feinschleif- bzw. Poliervorgang wird hier nicht weiter eingegangen, da er nicht Gegenstand des vorgeschlagenen Verfahrens ist.

Wichtig im Zusammenhang mit Fig. 9 ist jedoch das Spannen des Werkstücks 16 unter Benutzung der beiden Abflachungen 3 und 4 im Zusammenwirken mit den Formstücken 25 als auch unter Benutzung der Indexierung 15 im Zusammenwirken mit dem Bolzen 29. Des weiteren kommt es hier entscheidend auf die Aussteifung des Werkstücks 16 durch den ringförmigen Bereich 30 an, da die Struktur des Werkstücks 16 gerade beim Spannen mit Unterdruck stark belastet wird.

Wichtig ist auch, daß das Unterdruck-Spannwerkzeug 22 für alle zu bearbeitenden Werkstücke 16 die gleiche Form und die gleichen Abmessungen aufweist, da der ringförmige Bereich 30 in seiner Außenkontur standardisiert ist.

Nach dem Feinschleifen bzw. Polieren wird die fertige Oberfläche der konvexen Linsenvorderseite 19 gereinigt, z.B. mit Ultraschall, unter Verwendung standardisierter Waschrahmen, was erhebliche Kosten einspart.

Dann wird eine sehr feine Markierung, z. B. mittels Graviertechnik, auf der konvexen Linsenvorderseite 19 angebracht, die Angaben bezüglich der Wirkungseigenschaften des Brillenglases und das Logo des Herstellers enthält. Auch hierbei ist der ringförmige Bereich 30 mit seinen standardisierten Abmessungen und den Abflachungen 3 und 4 sowie der Indexierung 15 von erheblichem Vorteil. Für das Spannen der Werkstücke 16 wird nur eine einzige Vorrichtung benötigt.

Anschließend wird das Werkstück 16 mit einem Coating zur Verbesserung der optischen Eigenschaften und der Kratzfestigkeit versehen. Bei diesem Vorgang werden standardisierte Abdeckmasken benutzt, was wiederum die Herstellkosten reduziert.

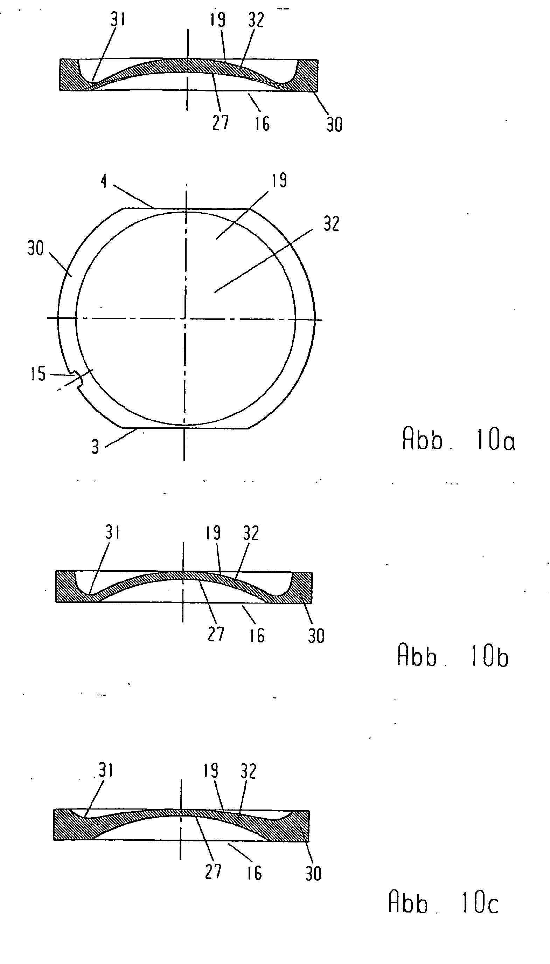

Fig. 10a zeigt den Fertigungszustand des Werkstücks 16 nach den Fertigungsschritten entsprechend Fig. 1 bis 9.

In der unteren Darstellung erkennt man die beiden Abflachungen 3 und 4, sowie die Indexierung 15. Die obere Darstellung zeigt das Werkstück 16 im Schnitt. Die kreisförmige Rille 31 ist entsprechend der Linsenform stark ausgeprägt.

Sowohl die konvexe Linsenvorderseite 19 als auch die konkave Linsenrückseite 27 sind fertig bearbeitet und mit dem Coating versehen. Eine Gravur zur Kennzeichnung des Brillenglases ist angebracht (nicht dargestellt).

Fig. 10b zeigt den Fertigungszustand des Werkstücks 16 nach den Fertigungsschritten entsprechend Fig. 1 bis 9 bei einem Neutral-Glas (Querschnitt).

Diese Abbildung entspricht im wesentlichen der Fig. 10a. Auch hier ist die kreisförmige Rille 31 stark ausgeprägt.

Fig. 10c zeigt den Fertigungszustand des Werkstücks 16 nach den Fertigungsschritten entsprechend Fig. 1 bis 9 bei einem Minus-Glas (Querschnitt).

Da bei Minus-Gläsern der Randbereich des Brillenglases 32 dicker ist als sein Zentrum, ist hier die kreisförmige Rille 31 aus geometrischen Gründen weniger stark ausgeprägt.

In einem letzten Arbeitsschritt (nicht dargestellt) wird das eigentliche Brillenglas 32 von dem ringförmigen Bereich 30 abgetrennt. Hierzu wird das Werkstück 16 am Rand gespannt und das eigentliche Brillenglas 32 mittels Unterdruck und/oder einer weichen unteren und oberen Spanneinrichtung festgehalten und der Trennschnitt dann z. B. mit einem Fingerfräser kleinen Durchmessers, durchgeführt.

Dieser Trennschnitt folgt einer Umrißlinie, die derjenigen der Brillenfassung entspricht, ggf. mit einem geringen Zuschlag als Bearbeitungszugabe für den Brillenoptiker. Das Brillenglas 32 ist dann nach einer weiteren Reinigung versandfertig.

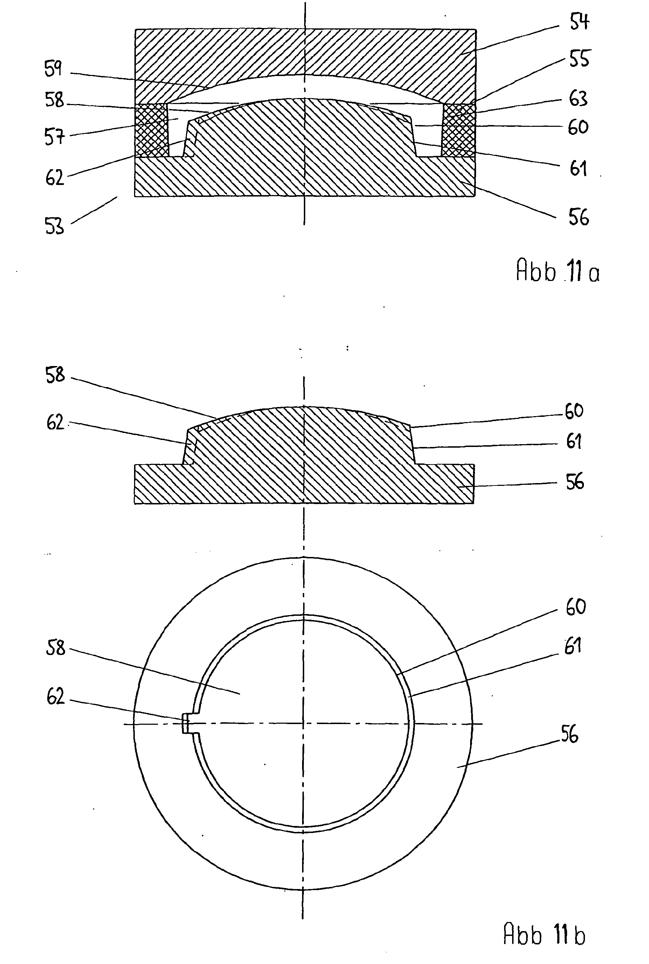

Die Fig. 11 und 12 zeigen eine andere Ausführungsform des Verfahrens. Hier werden als Rohlinge Halbfertigteile benutzt, die mittels spanloser Formgebungsverfahren erzeugt werden. Die Halbfertigteile bestehen aus Kunststoff. Sie werden mit einem Gießwerkzeug 53 hergestellt.

Das in Fig. 11a dargestellte Gießwerkzeug 53 besteht aus einer Vorderform 54, einem Dichtring 55 und einer Hinterform 56. Die genannten drei Bauteile schließen einen inneren Hohlraum 57 ein, in den die flüssige Masse zur Erzeugung des Halbfertigteils 41 eingegossen wird.

Diese Masse kann ein für optische Zwecke geeigneter flüssiger Kunststoff sein, der anschließend aushärtet. Vorgesehen sind jedoch auch mineralische Gläser, die durch Wärmezufuhr geschmolzen werden und dann ebenfalls vergossen werden können.

Die in dem Halbfertigteil 41 zugewandte Formseite 58 der Hinterform 56 ist - wie Fig. 11b zeigt - mit einer sehr fein polierten Oberfläche versehen, die ein Negativabdruck der zu erzeugenden konkaven Linsenrückseite 42 ist. Damit die Anzahl der benötigten Hinterformen 56 aus Gründen der Kostenersparnis klein bleibt, sind Dioptrien-Sprünge von 0,5 bis 1 dpt vorgesehen.

Die optische-Wirkung des fertigen Brillenglases 47, entsprechend dem auszuführenden Rezept, wird durch das Zusammenwirken der konvexen Linsenvorderseite 45 und der konkaven Linsenrückseite 42 erreicht.

Die konvexe Linsenvorderseite 45 wird entsprechend berechnet und bearbeitet. Trotz der kleinen Anzahl von Hinterformen 56 ist damit eine Rezeptfertigung möglich.

Die dem Halbfertigteil 41 zugewandte Formseite 59 der Vorderform 54 erzeugt keine optisch wirksame Oberfläche. Sie ist im dargestellten Fall leicht konvex geformt, damit bei den nachfolgenden Arbeitsgängen Zerspanungsaufwand eingespart wird. Die Formseite 59 kann auch eben sein.

Die Formseite 58 der Hinterform 56 ist erfindungsgemäß mit einem Absatz 60 versehen, der zum Anformen des Formrands 43 an dem Halbfertigteil 41 dient. Dieser Absatz 60 verfügt über eine schräge Ringfläche 61, mit der das Ausformen erleichtert wird.

Dieser Absatz 60 ist von besonderem Vorteil, insbesondere, weil er an den zahlreichen, in der Fertigung bereits vorhandenen, Hinterformen 56 nachträglich noch angebracht werden kann. Dadurch werden erhebliche Kosten gespart.

Im Bereich der Ringfläche 61 befindet sich auch eine Nase 62 zum Anformen der Markierung 44 an dem Halbfertigteil 41. Diese Nase 62 ist daher sehr exakt nach der Achse der Formseite 58 ausgerichtet.

Zur Verbindung der Vorderform 54 und der Hinterform 56 ist ein Dichtring 55 vorgesehen, der an seiner Innenseite über eine Abschrägung 63 verfügt. Diese dient ebenfalls der leichteren Ausformung des Halbfertigteils 41 aus dem Gießwerkzeug 53.

Durch Variation der Höhen-Abmessung in axialer Richtung des Dichtrings 55 kann die Dicke des Halbfertigteils 41 so gewählt werden, daß bei der Dickenoptimierung des Brillenglases 47 nur ein minimaler Zerspanungsaufwand entsteht.

Zur Herstellung von Halbfertigteilen 41 aus Kunststoff werden vorzugsweise Gießwerkzeuge 53 benutzt, bei denen die Vorderform 54 und die Hinterform 56 aus Mineralglas bestehen. Dies hat den Vorteil, daß sich Glas auf den bekannten Optikmaschinen (Linsenbearbeitung) mit höchster Präzision bearbeiten läßt und auch gut zu polieren ist.

Ein weiterer Vorteil ist die Korrosionsbeständigkeit von Glas, was die Lagerhaltung der Gießwerkzeuge 53 wesentlich erleichtert. Auch das Ausformen des Halbfertigteils 41 aus dem Gießwerkzeug 53 ist besonders leicht möglich, wenn die Vorderform 54 und die Hinterform 56 aus Mineralglas bestehen, da die Kunststoffe an dem Mineralglas nicht fest anhaften.

Das Gießwerkzeug 53 wird für den eigentlichen Gießvorgang in eine entsprechende Vorrichtung bzw. Maschine eingesetzt, wo der Gießvorgang stattfindet. Derartige Vorrichtungen und Maschinen sind Stand der Technik und werden daher nicht näher erläutert.

Nach dem Erhärten des Halbfertigteils 41 erfolgt das Ausformen durch Auseinanderziehen der Vorderform 54 und der Hinterform 56, sowie durch Abstreifen des Dichtrings 55. Anschließend kann die zerspanende Bearbeitung stattfinden, wobei der Formrand 43 zum Aufspannen des Werkstücks 49 dient.

Fig. 12a zeigt das Halbfertigteil vor der Bearbeitung in Schnittdarstellung, in einen Werstückhalter eingespannt:

An dem Halbfertigteil 41 ist die konkave Linsenrückseite 42 durch das Gießverfahren bereits in optisch wirksamer Qualität hergestellt. Eine Bearbeitung an dieser konkaven Linsenrückseite 42 findet nicht statt. Im Randbereich des Halbfertigteils 41 befindet sich der Formrand 43, der mit angegossen wurde. Dieser Formrand 43 bleibt während der gesamten nachfolgenden Bearbeitung erhalten und dient zum Spannen des Werkstücks in einem Werkstückhalter 64.

Der Formrand 43 ist ringförmig und verfügt an seiner Innen- bzw. Außenseite über eine innere Abschrägung 51 bzw. eine äußere Abschrägung 52. Diese Abschrägungen dienen der leichteren Ausformung des Halbfertigteils 41 nach dem Abgießen.

An der linken Seite des Formrands 43 befindet sich eine angegossene Markierung 44, die zur Identifizierung der Achse der optisch wirksamen Linsenrückseite 42 dient.

Die bereits leicht gewölbte Vorderseite 45 des Halbfertigteils 41 hat noch keine optischen Eigenschaften und muß bearbeitet werden. Hierzu ist das Halbfertigteil 41 in den Werkstückhalter 64 einer an sich bekannten Bearbeitungsmaschine eingespannt.

Zum Spannen dient der Formrand 43, der genügend hoch ausgebildet ist, so daß die Vorderseite und damit die spätere Linsenvorderseite 45 des Halbfertigteils 41 genügend weit über den Werkstückhalter 64 hinaus ragt. Damit kann die Linsenvorderseite 45 auch an ihrem Randbereich bearbeitet werden, ohne daß das Bearbeitungswerkzeug mit dem Werkstückhalter 64 kollidiert.

Die Bearbeitungsmaschine mit den verschiedenen Werkzeugen und auch das Bearbeitungsverfahren werden nicht weiter beschrieben. Diebezüglich wird auf die Ausführungen zu den Fig. 1 bis 10 verwiesen.

Fig. 12b zeigt das Werkstück nach der Bearbeitung der konvexen Linsenvorderseite 45 in Schnittdarstellung und in Draufsicht:

Die konvexe Linsenvorderseite 45 ist fertig bearbeitet und hat ihre optisch wirksame Oberfläche erhalten. Beide Linsenseiten sind durch nachfolgendes Coating und Markieren der optischen Achse mittels feiner Gravierungen fertiggestellt.

Im Rahmen der Fertigung wurde auch eine Dickenoptimierung durchgeführt. Das eigentliche Brillenglas 47 befindet sich im Innenbereich des Werkstücks 49 und wird durch die geometrische Grenzlinie 48 von dem Randbereich 50 abgegrenzt. Zu dem Randbereich 50 gehört auch der Formrand 43.

Die Grenzlinie 48 markiert in der Draufsicht den Umriss des fertigen Brillenglases mit einer kleinen Bearbeitungszugabe für den Optiker. Da das Brillenglas 47 in dem dargestellten Beispiel in der Mitte dicker als am Rand ist Plus-Glas, wurde im Rahmen der Dickenoptimierung der Rand des Brillenglases 47 entlang der Grenzlinie 48 soweit abgearbeitet, bis er der Breite der Brillenfassung entsprach.

Schließlich wird nach dem Coating und Markieren der Achse das Brillenglas 47 von dem Werkstück 49 abgetrennt. Hierzu wird das Bearbeitungswerkzeug z.B. dünner Fingerfräser entlang der Grenzlinie 48 geführt und das Brillenglas 47 dadurch herausgeschnitten. Die Bearbeitung erfolgt so, daß der Umriss der Grenzlinie 48 erhalten bleibt.

Es ist auch vorgesehen, daß das Werkstück 49, so wie Fig. 12b zeigt, an den Optiker ausgeliefert wird, der den Randbereich 50 entfernt und die Kontur entlang der Grenzlinie 58 selbst herstellt.

Die Fig. 13 und 14 zeigen eine noch andere Ausführungsform des erfiondungsgemäßen Verfahrens. Auch hier werden als Rohlinge Halbfertigteile verwendet, die mit einem Gießwerkzeug 53 in einem spanlosen Formgebungsverfahren hergestellt werden.

Das dargestellte Gießwerkzeug 53 besteht ebenfalls aus einer Vorderform 54, einem Dichtring 55 und einer Hinterform 56. Die genannten drei Bauteile schließen einen inneren Hohlraum 57 ein, in den die flüssige Masse zur Erzeugung des Halbfertigteils 41 eingegossen wird.

Diese Masse kann ein für optische Zwecke geeigneter flüssiger Kunststoff sein, der anschließend aushärtet. Vorgesehen sind jedoch auch mineralische Gläser, die durch Wärmezufuhr geschmolzen werden und dann ebenfalls vergossen werden können.

Die in dem Halbfertigteil 41 zugewandte Formfläche 58 der Hinterform 56 ist mit einer sehr fein polierten Oberfläche versehen, die ein Negativabdruck der zu erzeugenden konvexen Linsenvorderseite 45 ist. Damit die Anzahl der benötigten Hinterformen 56 aus Gründen der Kostenersparnis klein bleibt, sind Dioptrien-Sprünge von 0,25 oder größer vorgesehen.

Die optische Wirkung des fertigen Brillenglases 47, entsprechend dem auszuführenden Rezept, wird durch das Zusammenwirken der konvexen Linsenvorderseite 45 und der, durch mechanische Bearbeitung hergestellten, konkaven Linsenrückseite 42 erreicht. Die konkave Linsenrückseite 42 wird entsprechend berechnet und bearbeitet.

Die dem Halbfertigteil 1 zugewandte Formfläche 59 der Vorderform 54 erzeugt keine optisch wirksame Oberfläche. Sie ist im dargestellten Fall leicht konkav geformt, damit bei den nachfolgenden Arbeitsgängen Zerspanungsaufwand eingespart wird. Die Formfläche 59 kann jedoch auch eben sein.

Die Formfläche 58 der Hinterform 56 ist erfindungsgemäß mit einem Absatz 60 versehen, der zum Anformen des Formrands 43 an dem Halbfertigteil 41 dient. Dieser Absatz 60 verfügt über eine schräge Ringfläche 61, mit der das Ausformen erleichtert wird.

Im Bereich der Ringfläche 61 befindet sich auch eine Nase 62 zum Anformen der Markierung 44 an dem Halbfertigteil 41. Diese Nase 62 ist exakt nach der Achse der Formfläche 58 ausgerichtet.

Zur Verbindung der Vorderform 54 und der Hinterform 56 ist ein Dichtring 55 vorgesehen, der an seiner Innenseite über eine Abschrägung 63 verfügt. Diese Abschrägung 63 dient ebenfalls der leichteren Ausformung des Halbfertigteils 41 aus dem Gießwerkzeug 53.

Fig. 14a zeigt das Halbfertigteil 41 vor der Bearbeitung in Schnittdarstellung, in einen Werkstückhalter 64 eingespannt:

An dem Halbfertigteil 41 ist die konvexe Linsenvorderseite 45 durch das Gießverfahren bereits in optisch wirksamer Qualität hergestellt. Eine Bearbeitung an dieser konvexen Linsenvorderseite 45 findet nicht statt. Im Randbereich des Halbfertigteils 41 befindet sich der Formrand 43, der mit angegossen wurde und der über die konvexe Linsenvorderseite 45 hinausragt. Dieser Formrand 43 bleibt während der gesamten nachfolgenden Bearbeitung erhalten und dient zum Spannen des Werkstücks in einem Werkstückhalter 64.

Die leicht konkave Rückseite 42 des Halbfertigteils 1 hat noch keine optischen Eigenschaften und muß bearbeitet werden. Hierzu ist das Halbfertigteil 41 in den Werkstückhalter 64 einer an sich bekannten Bearbeitungsmaschine eingespannt.

Zum Spannen dient der Formrand 43, der genügend hoch ausgebildet ist, so daß die konkave Rückseite 42 des Halbfertigteils 1 genügend weit über den Werkstückhalter 24 hinaus ragt. Damit kann die konkave Rückseite 42 auch an ihrem Randbereich bearbeitet werden, ohne dass das Bearbeitungswerkzeug mit dem Werkstückhalter 64 kollidiert.

Fig. 14b zeigt das Werkstück 49 nach der Bearbeitung der konkaven Linsenrückseite 42 in Schnittdarstellung und in Draufsicht:

Die konkave Linsenrückseite 42 ist fertig bearbeitet und hat ihre optisch wirksame Oberfläche erhalten. Beide Linsenseiten sind durch nachfolgendes Coating und Markieren der optischen Achse mittels feiner Gravierungen fertiggestellt.

Im Rahmen der Fertigung wurde auch eine Dickenoptimierung durchgeführt. Das eigentliche Brillenglas 47 befindet sich im Innenbereich des Werkstücks 49 und wird durch die geometrische Grenzlinie 48 von dem Randbereich 50 abgegrenzt. Zu dem Randbereich 50 gehört auch der Formrand 43.

Die Grenzlinie 48 markiert in der Draufsicht den Umriss des fertigen Brillenglases ggf. mit einer kleinen Bearbeitungszugabe für den Optiker (1 bis 2 mm). Da das Brillenglas 47 in dem dargestellten Beispiel in der Mitte dicker als am Rand ist, Plus-Glas, wurde im Rahmen der Dickenoptimierung der Rand des Brillenglases 47 entlang der Grenzlinie 48 soweit abgearbeitet, bis er etwa der Breite der Brillenfassung entsprach.

Als letzter Arbeitsgang wird nach dem Coating und Markieren der Achse das Brillenglas 47 dann von dem Werkstück 49 abgetrennt. Hierzu wird das Bearbeitungswerkzeug z.B. dünner Fingerfräser entlang der Grenzlinie 48 geführt und das Brillenglas 47 dadurch herausgeschnitten. Die Bearbeitung erfolgt so, dass der Umriss der Grenzlinie 48 erhalten bleibt.

Es ist auch vorgesehen, dass das Werkstück 49, so wie in Fig. 14b gezeigt, an den Optiker ausgeliefert wird, der den Randbereich 50 entfernt und die Kontur entlang der Grenzlinie 48 selbst herstellt.

Die Erfindung ist nicht auf eine der vorbeschriebenen Ausführungsformen beschränkt, sondern in vielfältiger Weise abwandelbar. Man erkennt aber, daß bei dem Verfahren zur Fertigung von Brillengläsern 32 in der Rezept- bzw. Individual-Rezeptfertigung Kunststoffrohlinge 1, in Form von flachen, runden Scheiben benutzt werden. Die Kunststoffrohlinge 1 werden am äußeren Rand gespannt. Danach wird die gewünschte endgültige Oberflächengeometrie und Oberflächenqualität der Linsenvorderseite 19 und Linsenrückseite 27 durch Zerspanen mit Fräs- und/oder Drehwerkzeugen sowie durch Feinschleifen und ggf. Polieren hergestellt. Bei der Bearbeitung bleibt ein ringförmiger Bereich 30 am äußeren Umfang des Werkstücks 16 in größerer Dicke 33 erhalten. Dieser ringförmige Bereich 30 dient bei allen Bearbeitungs- und Transportvorgängen zum Spannen oder Ablegen des Werkstücks 16. Außerdem stützt und stabilisiert er das eigentliche Brillenglas 32 für die weitere Bearbeitung. An dem ringförmigen Bereich 30 werden Formgebungen angebracht, welche zur Identifikation der Bearbeitungsachsen dienen. An dem eigentlichen Brillenglas 32 werden feine Markierungen zur Kennzeichnung des erzeugten Brillenglases 32 angebracht. Anschließend wird das Brillenglas 32 von dem ringförmigen Bereich 30 abgetrennt

Ferner ist vorgesehen, daß bei- dem Verfahren zur Rezeptfertigung von Brillengläsern und anderen Formkörpern mit optisch wirksamen Oberflächen werden Halbfertigteile benutzt, die durch spanlose Formgebungsverfahren hergestellt werden. Anschließend werden mechanische Fertigungsschritte durchgeführt. Es werden Halbfertigteile 41 benutzt, bei denen die konkave Linsenrückseite 42 als optisch wirksame Oberfläche sowie ein Formrand 43 und ggf. eine Markierung 44 spanlos angeformt werden. Der Formrand 43 steht über die konkave Linsenrückseite 42 in axialer Richtung über und wird zum Spannen in den spannehmenden Bearbeitungsmaschinen benutzt, mit denen die gewünschte Oberflächen-Geometrie und Qualität an der Linsenvorderseite 45 hergestellt wird. Der Formrand 43 bleibt bei allen weiteren Bearbeitungsvorgängen erhalten und dient zum Spannen oder Ablegen des Werkstücks 4 und auch zum Abstützen des eigentlichen Brillenglases 47 bzw. des Formkörpers bei der weiteren Bearbeitung. Bei dieser wird die Lage der Markierung 44 berücksichtigt. Das Brillenglas 47 wird am Ende der Bearbeitungen von dem Formrand 43 abgetrennt

Bei dem Verfahren zur Herstellung von Brillengläsern und anderen optischen Formkörpern werden Halbfertigteile benutzt, die durch spanlose Formgebungsverfahren wie z.B. Gießen hergestellt werden. Anschließend werden mechanische Fertigungsschritte durchgeführt. Es werden Halbfertigteile 41 benutzt, bei denen die konvexe Linsenvorderseite 45 als optisch wirksame Oberfläche sowie ein Formrand 43 und ggf. eine Markierung 44 spanlos angeformt werden. Der Formrand 43 steht über die konvexe Linsenvorderseite 5 in axialer Richtung über und wird zum Spannen in den spannehmenden Bearbeitungsmaschinen benutzt, mit denen die gewünschte Oberflächen-Geometrie und -Qualität an der konkaven Linsenrückseite 46 hergestellt wird. Der Formrand 43 bleibt bei allen weiteren Bearbeitungsvorgängen erhalten und dient zum Spannen oder Ablegen des Werkstücks 49 und auch zum Abstützen des eigentlichen Brillenglases 47 bzw. des Formkörpers bei der weiteren Bearbeitung. Bei dieser wird die Lage der Markierung 44 berücksichtigt. Das Brillenglas 7 wird am Ende der Bearbeitungen vom Randbereich 50 mit dazugehörigem Formrand 3 abgetrennt

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Kunststoffrohling
- 2: Spannwerkzeug
- 3: erste Abflachung
- 4: zweite Abflachung
- 5: Spann- und Zentrierrand
- 6: Ausnehmung
- 7: Kante
- 8: Ausnehmung
- 9: Walzenfräser
- 10: Frässchneide
- 11: Werkzeugspeicher
- 12: Drehwerkzeug
- 12.1: Drehwerkzeug
- 12.2: Drehwerkzeug
- 12.3: Drehwerkzeug
- 12.4: Drehwerkzeug
- 13: Einformung
- 14: Walzenfräser
- 15: Indexierung
- 16: Werkstück
- 17: Planfläche
- 18: Spannwerkzeug
- 19: konvexe Linsenvorderseite
- 20: Werkzeugspindel
- 21: Werkstückspindel
- 22: Unterdruck-Spannwerkzeug
- 23: geringe Wanddicke
- 24: Schlauchverbindung
- 25: Formstück
- 26: Kugelgelenk
- 27: konkave Linsenrückseite
- 28: Spannelement
- 29: Bolzen
- 30: ringförmiger Bereich
- 31: kreisförmige Rille
- 32: Brillenglas
- 33: große Dicke
- 34: Werkstückspindel
- 35: größere Kerbe
- 41: Halbfertigteil
- 42: konkave Linsenrückseite
- 43: Formrand
- 44: Markierung
- 45: konvexe Linsenvorderseite
- 47: Brillenglas
- 48: Grenzlinie
- 49: Werkstück
- 50: Randbereich
- 51: innere Abschrägung
- 52: äußere Abschrägung
- 53: Gießwerkzeug
- 54: Vorderform
- 55: Dichtring
- 56: Hinterform
- 57: innerer Hohlraum
- 58: Formseite/Formfläche
- 59: Formseite/Formfläche
- 60: Absatz
- 61: Ringfläche
- 62: Nase
- 63: Abschrägung
- 64: Werkstückhalter

## Patentansprüche

1. Verfahren zur Rezept- bzw. Individualrezept-Fertigung von Brillengläsern und anderen Formkörpern mit optisch aktiven Oberflächen, unter Verwendung von Kunststoffrohlingen, welche die Form von flachen, runden Scheiben mit beliebiger Oberflächengeometrie haben, und unter Anwendung von Fertigungsmethoden mit mechanischem Materialabtrag (Fräsen, Drehen, Schleifen, Feinschleifen, Polieren usw.), **dadurch gekennzeichnet, daß** die verwendeten Kunststoffrohlinge (1) am äußeren Rand gespannt werden (schließend oder spreizend) und die gewünschte endgültige Oberflächengeometrie und Oberflächenqualität der konvexen Linsenvorderseite (19) und der konkaven Linsenrückseite (27) durch Zerspanen mit Fräs und/oder Drehwerkzeugen sowie durch Feinschleifen und ggf. Polieren hergestellt werden, wobei ein ringförmiger Bereich (30) am äußeren Umfang des Werkstücks (16) in größerer Dicke (33) erhalten bleibt und der ringförmige Bereich (30) bei allen Bearbeitungs- und Transportvorgängen zum Spannen oder Ablegen des Werkstücks (16) dient und außerdem der ringförmige Bereich (30) das eigentliche Brillenglas (32) bzw. den Formkörper für die weitere Bearbeitung abstützt und mechanisch stabilisiert und daß an dem ringförmigen Bereich (30) Markierungen und/oder Formgebungen angebracht werden, welche zur Identifikation der Bearbeitungsachsen dienen und daß an der Oberfläche des eigentlichen Brillenglases (32) bzw. des Formkörpers sehr feine Markierungen angebracht werden, die zur Kennzeichnung der Achslage der erzeugten Oberflächengeometrien dienen und daß anschließend das Brillenglas (32) von dem ringförmigen Bereich (30) abgetrennt wird.

2. Verfahren nach Anspruch 1, **dadurch gekennzeichnet, daß** der Kunststoffrohling (1) im Durchmesser etwas größer ist (einige Millimeter), als dies der Durchmesser des eigentlichen Brillenglases (32) nach dem Stand der Technik erfordern würde.

3. Verfahren nach Anspruch 1 oder2, **dadurch gekennzeichnet, daß** Kunststoffrohlinge (1) benutzt werden, deren Vorder- und Rückseite entweder plane Flächen oder räumlich vorgeformte Strukturen in beliebiger Kombination aufweisen, die jedoch keine optisch wirksame Qualität haben.

4. Verfahren nach einem der Ansprüche 1 bis 4, **dadurch gekennzeichnet, daß** das Herstellen der Oberflächengeometrie zunächst durch Fräsen und anschließend im Feinbereich durch Drehen erfolgt oder alternativ nur eine Fräsbearbeitung oder eine Drehbearbeitung stattfindet.

5. Verfahren nach einem der Ansprüche 1 bis 5, **dadurch gekennzeichnet, daß** für die Fräsarbeiten Walzenfräser (9) benutzt werden, deren Durchmesser senkrecht zur Rotationsachse deutlich größer ist als ihre Dicke in Richtung der Rotationsachse und daß die Frässchneiden (10) am Umfang des Walzenfräsers (9) halbkreisförmig ausgebildet sind und einen kleinen Durchmesser aufweisen (z. B. 11 mm).

6. Verfahren nach einem der Ansprüche 1 bis 5, **dadurch gekennzeichnet, daß** für die Dreharbeiten Drehwerkzeuge (12) benutzt werden, die am äußeren Umfang eines Werkzeugspeichers (11) sitzen und entweder kreisrund sind oder kreisförmige Teilbereiche an den Schneidkanten aufweisen und dabei einen kleinen Durchmesser haben.

7. Verfahren nach einem der Ansprüche 1 bis 6, **dadurch gekennzeichnet, daß** die Frässchneiden (10) des Walzenfräsers (9) als Drehwerkzeuge benutzt werden.

8. Verfahren nach einem der Ansprüche 1 bis 7, **dadurch gekennzeichnet, daß** an den Kunststoffrohlingen (1), bei den ersten Arbeitsschritten durch fräsende Bearbeitung am Rand Markierungen und Formgebungen angebracht werden, welche die Form von zwei Abflachungen (3 und 4) oder einer größeren Kerbe (35) sowie einer Indexierung (15) haben.

9. Verfahren nach einem der Ansprüche 1 bis 8, **dadurch gekennzeichnet, daß** zunächst die konkave Linsenrückseite (27) des Brillenglases (32) durch Fräsen und Drehen hergestellt wird, woran sich Feinschleif- und ggf. Poliervorgänge anschließen und daß das Brillenglas (32) danach gereinigt wird und einen Überzug mit Schutzlack oder Schutzfolie erhält und anschließend das gewendete Brillenglas (32) an der konvexen Linsenvorderseite (19) mit den gleichen Arbeitsgängen bearbeitet wird.

10. Verfahren nach einem der Ansprüche 1 bis 9, **dadurch gekennzeichnet, daß** beim Herstellen der konvexen Linsenvorderseite (19) und der konkaven Linsenrückseite (27) eine Dickenoptimierung durchgeführt wird.

11. Verfahren nach einem der Ansprüche 1 bis 10, **dadurch gekennzeichnet, daß** beim Herstellen der Geometrie an der Linsenvorderseite im Rahmen der Rezeptfertigung eine Überlagerung von verschiedenen Kurven bzw. Geometrien durchgeführt wird.

12. Verfahren nach einem der Ansprüche 1 bis 11, **dadurch gekennzeichnet, daß** im Rahmen der Dickenoptimierung von Brillengläsern (32) beim Fräsen der konvexen Linsenvorderseite (19) im Randbereich des Werkstücks (16) eine kreisförmige Rille (31) erzeugt wird, die nach außen hin den ringförmigen Bereich (30) begrenzt und nach innen in das eigentliche Brillenglas (32) übergeht.

13. Verfahren nach einem der Ansprüche 1 bis 12, **dadurch gekennzeichnet, daß** die Werkzeugspindel (20) mit dem Werkzeugspeicher (11) und seinen Drehwerkzeugen (12) beim Arbeitsgang Drehen in der B-Achse blockiert ist und außerdem gesteuerte, translatorische Bewegungen in der X-Achse ausführt, während die Werkstückspindel (21) mit dem Spannwerkzeug (18) und dem Werkstück. (16) in der C-Achse phasen- und drehzahlgesteuert rotiert und in der Z-Achse translatorische Bewegungen mit hoher Dynamik ausführt.

14. Verfahren nach einem der Ansprüche 1 bis 13, **dadurch gekennzeichnet, daß** der Werkzeugspeicher (11) mit dem am Werkstück (16) im Eingriff befindlichen Drehwerkzeug (12.1), während der Vorschubbewegung der Werkzeugspindel (20) in der X-Achse, kleine Drehbewegungen in der B-Achse ausführt, wodurch eine erwünschte Winkelnachführbewegung stattfindet und **dadurch** die Hauptachse des Drehwerkzeugs (12.1) während des gesamten Arbeitsgangs Drehen zur Oberfläche des Werkstücks (16) die gewünschte relative Winkellage einnimmt.

15. Verfahren nach Anspruch 14, **dadurch gekennzeichnet, daß** sich die Winkellage der Hauptachse des Drehwerkzeugs (12.1) relativ zur Oberfläche des Werkstücks (16) während des Arbeitsgangs Drehen durch Drehbewegungen in der B-Achse gesteuert verändert.

16. Verfahren nach Anspruch 14 oder 15, **dadurch gekennzeichnet, daß** die Winkellage der Hauptachse des Drehwerkzeugs (12.1) relativ zur Oberfläche des Werkstücks (16) während des Arbeitsgangs Drehen durch Drehbewegungen in der B-Achse konstant bleibt.

17. Vorrichtung zur Durchführung des Verfahrens nach einem der Ansprüche 1 bis 16 bestehend aus Bearbeitungsmaschinen mit zwei rotatorisch angetriebenen Spindeln, die translatorisch verfahren werden können, wobei die Rotationen und die Translationen gesteuert und in der Maschinensteuerung verknüpft sind und mit den Spindeln Spann- und Bearbeitungswerkzeuge verbunden sind, **dadurch gekennzeichnet, daß** die Fräs-Drehmaschine über eine Werkzeugspindel (20) verfügt die in der B-Achse phasen- und drehzahlgesteuert rotieren und in der Y-Achse und X-Achse gesteuert verfahren kann, während die Werkstückspindel (21) mit den Spannwerkzeugen (2) bzw. (18) phasen- und drehzahlgesteuert rotieren und in der Z-Achse mit hoher Dynamik translatorisch verfahren kann, wobei das Spannwerkzeug (2) über Ausnehmungen (6) und (8) und das Spannwerkzeug (18) über Spannelemente (28) verfügt.

18. Vorrichtung nach Anspruch 17 **dadurch gekennzeichnet, daß** der Werkzeugspeicher (11) für die Drehwerkzeuge (12) gemeinsam und koaxial mit dem Walzenfräser (9) an der Werkzeugspindel (20) befestigt ist.

19. Vorrichtung nach einem der Ansprüche 17 bis 18, **dadurch gekennzeichnet, daß** vier Drehwerkzeuge (12.1) bis (12.4) oder eine kleinere oder größere Anzahl von Drehwerkzeugen an einem Werkzeugspeicher (11) befestigt sind, die beliebige Formen und Abmessungen haben und daß der Werkzeugspeicher (11) an der Werkzeugspindel (20) Drehbewegungen in der B-Achse ausführt, mit denen das gewünschte Drehwerkzeug in die Bearbeitungs-Startposition bewegt wird.

20. Verfahren zur Rezept- bzw. Individualrezept-Fertigung von Brillengläsern und anderen Formkörpern mit optisch wirksamen Oberflächen, unter Verwendung von Halbfertigteilen, die durch spanlose Formgebungsverfahren wie Gießen, Spritzgießen oder Pressen mittels Gießwerkzeugen oder Presswerkzeugen hergestellt werden, woran sich mechanische Fertigungsschritte wie Fräsen, Drehen, Schleifen und Polieren anschließen, **dadurch gekennzeichnet, daß** Halbfertigteile(41) mittels spanloser Forgebungsverfahren hergestellt. werden und dabei die konkave Linsenrückseite (42) als optisch wirksame Oberfläche sowie ein Formrand (43) angeformt werden und daß anschließend die Halbfertigteile (41) mittels ihres Formrandes (43) in Bearbeitungsmaschinen eingespannt werden und dort die gewünschte Oberflächen-Geometrie und Qualität der Linsenvorderseite (45) durch Zerspanen und Feinstschleifen sowie ggf. durch Polieren hergestellt werden, wobei der Formrand (43) erhalten bleibt und bei allen weiteren Bearbeitungs- und Transportvorgängen zum Spannen oder Ablegen des Werkstücks (49) dient und außerdem das eigentliche Brillenglas (47) bzw. den Formkörper für die weitere Bearbeitung abstützt und mechanisch stabilisiert und daß das Brillenglas (47) bzw. der Formkörper am Ende der Bearbeitungen von dem Formrand (43) abgetrennt werden.

21. Verfahren nach Ansprüch 20, **dadurch gekennzeichnet, daß** an dem Halbfertigteil (41) eine Markierung (44) mittels spanloser Formgebungsverfahren im Bereich des Formrandes (43) erzeugt wird, welche die Achslage der Oberflächengeometrie an der optisch wirksamen, konkaven Linsenrückseite (42) kennzeichnet.

22. Verfahren nach Anspruch 20 oder 21, **dadurch gekennzeichnet, daß** bei der Herstellung von Brillengläsern (47) die konvexe Linsenvorderseite (45) durch die mechanische Bearbeitung eine optisch wirksame Geometrie erhält, die sich mit derjenigen der konkaven Linsenrückseite (42) so ergänzt, daß das erzeugte Brillenglas (47) eine optische Wirkung hat, die dem vorgegebenen Rezept entspricht, ohne daß unerwünschte Dioptriensprünge in der Gesamtwirkung des Brillenglases (47) auftreten, was insbesondere auch für bifokale Gläser gilt.

23. Verfahren nach einem der Ansprüche 20 bis 22 **dadurch gekennzeichnet, daß** beim Herstellen der Geometrie an der konvexen Linsenvorderseite (45) im Rahmen der Rezeptfertigung eine Überlagerung von verschiedenen Kurven bzw. Geometrien durchgeführt wird und insbesondere torische, atorische, prismatische und bifokale Formgebungen überlagert werden.

24. Verfahren nach einem der Ansprüche 20 bis 23, **dadurch gekennzeichnet, daß** an der Oberfläche des Brillenglases (47) sehr feine Gravierungen zum Markieren der optischen Achse angebracht werden, bevor das Brillenglas (47) von dem Formrand (43) abgetrennt wird.

25. Verfahren nach einem der Ansprüche 20 bis 24, **dadurch gekennzeichnet, daß** beim Herstellen der konvexen Linsenvorderseite (45) eine Dickenoptimierung durchgeführt wird.

26. Verfahren zur Herstellung von Brillengläsern und anderen optischen Formkörpern, unter Verwendung von Halbfertigteilen, die durch spanlose Formgebungsverfahren wie Gießen, Spritzgießen oder Pressen mittels Gießwerkzeugen oder Presswerkzeugen hergestellt werden, woran sich mechanische Fertigungsschritte wie Fräsen, Drehen, Schleifen und Polieren anschließen, **dadurch gekennzeichnet, daß** Halbfertigteile (41) mittels spanloser Formgebungsverfahren hergestellt werden und dabei die konvexe Linsenvorderseite (45) als optisch wirksame Oberfläche sowie ein Formrand (43) angeformt werden und daß anschließend die Halbfertigteile (41) mittels ihres Formrandes (43) in Bearbeitungsmaschinen eingespannt werden und dort die gewünschte Oberflächen-Geometrie und Qualität der konkaven Linsenrückseite (46) durch Zerspanen und Feinstschleifen sowie ggf. durch Polieren hergestellt werden, wobei der Formrand (43) erhalten bleibt und bei allen weiteren Bearbeitungs- und Transportvorgängen zum Spannen oder Ablegen des Werkstücks (49) dient und außerdem das eigentliche Brillenglas (47) bzw. den Formkörper für die weitere Bearbeitung abstützt und mechanisch stabilisiert und daß das Brillenglas (47) bzw. der Formkörper am Ende der Bearbeitungen von dem Randbereich (50) mit dazugehörigem Formrand (43) abgetrennt werden.

27. Verfahren nach Anspruch 26, **dadurch gekennzeichnet, daß** bei der Herstellung von Brillengläsern (47) die konkave Linsenrückseite (42) durch die mechanische Bearbeitung eine optisch wirksame Geometrie erhält, die sich mit derjenigen der konvexen Linsenvorderseite (45) so ergänzt, daß das erzeugte Brillenglas (47) eine optische Wirkung hat, die dem vorgegebenen Rezept entspricht.

28. Verfahren nach Anspruch 26 oder 27, **dadurch gekennzeichnet, daß** an dem Halbfertigteil (41) eine Markierung (44) mittels spanloser Formgebungsverfahren im Bereich des Formrandes (43) erzeugt wird, welche die Achslage der Oberflächengeometrie an der optisch wirksamen, konvexen Linsenvorderseite (45) kennzeichnet.

29. Verfahren nach einem der Ansprüche 27 bis 28, **dadurch gekennzeichnet, daß** beim spanlosen Herstellen der Geometrie an der konvexen Linsenvorderseite (45) eine Überlagerung von verschiedenen Kurven bzw. Geometrien durchgeführt wird und insbesondere sphärische oder asphärische bzw. torische oder atorische Formgebungen ggf. mit bifokalen Flächen oder Gleitsichtflächen überlagert werden.

30. Verfahren nach einem der Ansprüche 26 bis 29 **dadurch gekennzeichnet, daß** an der Oberfläche des Brittenglases (47) sehr feine Gravierungen zum Markieren der optischen Achse angebracht werden, bevor das Brillenglas (47) von dem Randbereich (50) mit dazugehörigem Formrand (43) abgetrennt wird.

31. Verfahren nach einem der Ansprüche 26 bis 30 **dadurch gekennzeichnet, daß** beim Herstellen der konkaven Linsenrückseite (42) mittels mechanischer Bearbeitungsverfahren eine Dickenoptimierung durchgeführt wird.

32. Vorrichtung zur Durchführung des Verfahrens nach einem der Ansprüche 20 bis 31, bestehend aus einem Gießwerkzeug, das aus einer Vorderform, einer Hinterform sowie einem Dichtring zusammengesetzt ist, wobei die genannten drei Teile lösbar und abdichtend miteinander verbunden sind, **dadurch gekennzeichnet, daß** die Hinterform (56) über einen Absatz (60) verfügt und daß die Hinterform (56) eine Formseite (58) aufweist, mit der optisch wirksame Oberflächen erzeugt werden können und daß die Vorderform (54) eine Formseite (59) aufweist, mit der keine optisch aktiven Oberflächen erzeugt werden.

33. Vorrichtung nach Anspruch 32, **dadurch gekennzeichnet, daß** im Bereich des Absatzes (60) eine Nase (62) vorhanden ist, die zur geometrischen Achse der Formseite (58) an der Hinterform (56) mit großer Präzision ausgerichtet ist.

34. Vorrichtung nach Anspruch 32 oder 33, **dadurch gekennzeichnet, daß** der Absatz (60) eine schräge Ringfläche (61) aufweist.

35. Vorrichtung nach einem der Ansprüche 32 bis 34, **dadurch gekennzeichnet, daß** der Dichtring (55) auf seiner Innenseite eine Abschrägung (63) aufweist.

36. Vorrichtung nach einem der Ansprüche 32 bis 35 **dadurch gekennzeichnet, daß** zwischen der Vorderform (54), der Hinterform (56) sowie dem Dichtring (55) ein innerer Hohlraum (57) vorhanden ist.

## Claims

1. Method for producing prescription or individual-prescription ophthalmic lenses and other shaped bodies having optically active surfaces, using plastic blanks which are in the form of flat, round discs with any desired surface geometry, and using production methods with mechanical stock removal (milling, turning, grinding, smoothing, polishing, etc.), **characterized in that** the plastic blanks (1) used are clamped (externally or internally) at the outer edge and the desired final surface geometry and surface quality of the convex front side (19) of the lens and of the concave rear side (27) of the lens are produced by machining with milling and/or lathe tools and by smoothing and, if need be, polishing, wherein an annular region (30) of larger thickness (33) is retained at the outer circumference of the workpiece (16), and the annular region (30) serves for clamping or depositing the workpiece (16) during all the processing and transport operations, and in addition the annular region (30) supports and mechanically stabilizes the actual ophthalmic lens (32) or the shaped body for the further processing, and **in that** markings and/or shapes which serve to identify the processing axes are applied to the annular region (30), and **in that** very fine markings which serve to identify the axis location of the surface geometries produced are applied to the surface of the actual ophthalmic lens (32) or the shaped body, and **in that** the ophthalmic lens (32) is then separated from the annular region (30).

2. Method according to Claim 1, **characterized in that** the plastic blank (1) has a diameter slightly larger (a few millimetres) than would be required by the diameter of the actual ophthalmic lens (32) according to the prior art.

3. Method according to Claim 1 or 2, **characterized in that** plastic blanks (1) are used whose front and rear sides have either plane surfaces or three-dimensionally preformed structures in any desired combination, though without optically active quality.

4. Method according to one of Claims 1 to 4, **characterized in that** the surface geometry is first produced by milling and then in the fine region by turning, or alternatively only a milling operation or a turning operation is carried out.

5. Method according to one of Claims 1 to 5, **characterized in that** plain milling cutters (9) whose diameter at right angles to the axis of rotation is markedly greater than the thickness thereof in the direction of the axis of rotation are used for the milling, and **in that** the milling blades (10) at the circumference of the plain milling cutter (9) are of semicircular design and have a small diameter (e.g. 11 mm).

6. Method according to one of Claims 1 to 5, **characterized in that** lathe tools (12) which sit at the outer circumference of a tool magazine (11) and are either circular or have circular sections at the cutting edges and at the same time have a small diameter are used for the turning.

7. Method according to one of Claims 1 to 6, **characterized in that** the milling blades (10) of the plain milling cutter (9) are used as lathe tools.

8. Method according to one of Claims 1 to 7, **characterized in that** markings and shapes are applied to the plastic blanks (1) during the initial operations by milling at the edge, said markings and shapes being in the form of two flats (3 and 4) or of a larger notch (35) and of indexing (15).

9. Method according to one of Claims 1 to 8, **characterized in that** first of all the concave rear side (27) of the ophthalmic lens (32) is produced by milling and turning, followed by smoothing and, if need be, polishing operations, and **in that** the ophthalmic lens (32) is then cleaned and is given a coating having a protective lacquer or a protective film, and then the ophthalmic lens (32), which is turned over, is processed on the convex front side (19) of the lens using the same operations.

10. Method according to one of Claims 1 to 9, **characterized in that** the thickness is optimized during the production of the convex front side (19) of the lens and of the concave rear side (27) of the lens.

11. Method according to one of Claims 1 to 10, **characterized in that**, in the course of producing prescription lenses, various curves or geometries are superimposed during the production of the geometry on the front side of the lens.

12. Method according to one of Claims 1 to 11, **characterized in that**, in the course of optimizing the thickness of ophthalmic lenses (32), a circular groove (31) is produced in the edge region of the workpiece (16) during the milling of the convex front side (19) of the lens, said groove (31) defining the annular region (30) towards the outside and merging towards the inside into the actual ophthalmic lens (32).

13. Method according to one of Claims 1 to 12, **characterized in that** the tool spindle (20) with the tool magazine (11) and the lathe tools (12) thereof is locked in the B axis during the turning operation and in addition performs controlled, translatory movements in the X axis, while the work spindle (21) with the clamping tool (18) and the workpiece (16) rotates in the C axis in a phase- and speed-controlled manner and performs highly dynamic translatory movements in the Z axis.

14. Method according to one of Claims 1 to 13, **characterized in that** the tool magazine (11) with the lathe tool (12.1), which is in engagement with the workpiece (16), performs small rotary movements in the B axis during the feed movement of the tool spindle (20) in the X axis, as a result of which a desired angle tracking movement takes place and the main axis of the lathe tool (12.1) thereby assumes the desired angular position relative to the surface of the workpiece (16) during the entire turning operation.

15. Method according to Claim 14, **characterized in that** the angular position of the main axis of the lathe tool (12.1) relative to the surface of the workpiece (16) varies in a controlled manner during the turning operation by rotary movements in the B axis.

16. Method according to Claim 14 or 15, **characterized in that** the angular position of the main axis of the lathe tool (12.1) relative to the surface of the workpiece (16) remains constant during the turning operation by rotary movements in the B axis.

17. Apparatus for carrying out the method according to one of Claims 1 to 16, consisting of processing machines having two rotationally driven spindles which can be moved in a translatory manner, wherein the rotations and translatory movements are controlled and are linked in the machine control, and clamping and processing tools are connected to the spindles, **characterized in that** the milling machine/lathe has a tool spindle (20) which can rotate in the B axis in a phase- and speed-controlled manner and can move in the Y axis and X axis in a controlled manner, while the work spindle (21) with the clamping tools (2) or (18) can rotate in a phase- and speed-controlled manner and can move in a translatory manner with high dynamics in the Z axis, wherein the clamping tool (2) has recesses (6) and (8) and the clamping tool (18) has clamping elements (28).

18. Apparatus according to Claim 17, **characterized in that** the tool magazine (11) for the lathe tools (12) is fastened to the tool spindle (20) jointly and coaxially with the plain milling cutter (9).

19. Apparatus according to either of Claims 17 and 18, **characterized in that** four lathe tools (12.1) to (12.4) or a smaller or larger number of lathe tools which can have any desired shapes and dimensions are fastened to a tool magazine (11), and **in that** the tool magazine (11) on the tool spindle (20) performs rotary movements in the B axis, with which rotary movements the desired lathe tool is moved into the starting position for processing.

20. Method for producing prescription or individual-prescription ophthalmic lenses and other shaped bodies having optically active surfaces, using semi-finished parts which are produced by non-cutting shaping processes such as casting, injection moulding or compression moulding by means of casting tools or compression moulds, followed by mechanical production steps such as milling, turning, grinding and polishing, **characterized in that** semi-finished parts (41) are produced by means of non-cutting shaping processes and the concave rear side (42) of the lens as an optically active surface and a shaped edge (43) are integrally formed in the process, and **in that** the semi-finished parts (41) are then clamped in processing machines by means of their shaped edge (43) and the desired surface geometry and quality of the front side (45) of the lens are produced there by machining and smoothing and, if need be, by polishing, wherein the shaped edge (43) is retained and serves for clamping or depositing the workpiece (49) during all further processing and transport operations and in addition supports and mechanically stabilizes the actual ophthalmic lens (47) or the shaped body for the further processing, and **in that** the ophthalmic lens (47) or the shaped body is separated from the shaped edge (43) at the end of the processing operations.

21. Method according to Claim 20, **characterized in that** a marking (44) is produced on the semi-finished part (41) in the region of the shaped edge (43) by means of non-cutting shaping processes, said marking (44) identifying the axis location of the surface geometry on the optically active concave rear side (42) of the lens.

22. Method according to Claim 20 or 21, **characterized in that**, during the production of ophthalmic lenses (47), the mechanical processing gives the convex front side (45) of the lens an optically active geometry which complements that of the concave rear side (42) of the lens in such a way that the ophthalmic lens (47) produced has an optical action which corresponds to the given prescription without undesirable dioptre increments occurring in the overall action of the ophthalmic lens (47), which also applies in particular to bifocal lenses.

23. Method according to one of Claims 20 to 22, **characterized in that**, in the course of producing prescription lenses, various curves or geometries are superimposed, and in particular toric, atoric, prismatic and bifocal shapes are superimposed, during the production of the geometry of the convex front side (45) of the lens.

24. Method according to one of Claims 20 to 23, **characterized in that** very fine engravings for marking the optical axis are applied to the surface of the ophthalmic lens (47) before the ophthalmic lens (47) is separated from the shaped edge (43).

25. Method according to one of Claims 20 to 24, **characterized in that** the thickness is optimized during the production of the convex front side (45) of the lens.

26. Method for producing ophthalmic lenses and other shaped bodies, using semi-finished parts which are produced by non-cutting shaping processes such as casting, injection moulding or compression moulding by means of casting tools or compression moulds, followed by mechanical production steps such as milling, turning, grinding and polishing, **characterized in that** semi-finished parts (41) are produced by means of non-cutting shaping processes and the convex front side (45) of the lens as an optically active surface and a shaped edge (43) are integrally formed in the process, and **in that** the semi-finished parts (41) are then clamped in processing machines by means of their shaped edge (43) and the desired surface geometry and quality of the concave rear side (46) of the lens are produced there by machining and smoothing and, if need be, by polishing, wherein the shaped edge (43) is retained and serves for clamping or depositing the workpiece (49) during all further processing and transport operations and in addition supports and mechanically stabilizes the actual ophthalmic lens (47) or the shaped body for the further processing, and **in that** the ophthalmic lens (47) or the shaped body is separated from the edge region (50) with associated shaped edge (43) at the end of the processing operations.

27. Method according to Claim 26, **characterized in that**, during the production of ophthalmic lenses (47), the mechanical processing gives the concave rear side (42) of the lens an optically active geometry which complements that of the convex front side (45) of the lens in such a way that the ophthalmic lens (47) produced has an optical action which corresponds to the given prescription.

28. Method according to Claims 26 or 27, **characterized in that** a marking (44) is produced on the semi-finished part (41) in the region of the shaped edge (43) by means of non-cutting shaping processes, said marking (44) identifying the axis location of the surface geometry on the optically active convex front side (45) of the lens.

29. Method according to either of Claims 27 and 28, **characterized in that** various curves or geometries are superimposed, and in particular spherical or aspherical or toric or atoric shapes, if need be with bifocal surfaces or progressive surfaces, are superimposed, during the non-cutting production of the geometry of the convex front side (45) of the lens.

30. Method according to one of Claims 26 to 29, **characterized in that** very fine engravings for marking the optical axis are applied to the surface of the ophthalmic lens (47) before the ophthalmic lens (47) is separated from the edge region (50) with associated shaped edge (43).

31. Method according to one of Claims 26 to 30, **characterized in that** the thickness is optimized by means of mechanical processing methods during the production of the concave rear side (45) of the lens.

32. Apparatus for carrying out the method according to one of Claims 20 to 31, consisting of a casting tool which is composed of a front mould, a rear mould and a sealing ring, wherein said three parts are connected to one another in a detachable and sealing manner, **characterized in that** the rear mould (56) has a step (60), and **in that** the rear mould (56) has a shaped side (58) with which optically active surfaces can be produced, and **in that** the front mould (54) has a shaped side (59) with which no optically active surfaces are produced.

33. Apparatus according to Claim 32, **characterized in that** there is a nose (62) in the region of the step (60), said nose (62) being aligned in a highly precise manner with the geometrical axis of the shaped side (58) on the rear mould (56).

34. Apparatus according to Claim 32 or 33, **characterized in that** the step (60) has a sloping annular surface (61).

35. Apparatus according to one of Claims 32 to 34, **characterized in that** the sealing ring (55) has a slope (63) on its inner side.

36. Apparatus according to one of Claims 32 to 35, **characterized in that** there is an inner cavity (57) between the front mould (54), the rear mould (56) and the sealing ring (55).

## Revendications

1. Procédé de fabrication selon des spécifications standard ou individualisées de verres de lunettes et d'autres corps façonnés à surface optiquement active par recours à des ébauches en matière synthétique qui ont la forme de disques circulaires plats à géométrie de surface quelconque et en utilisant des procédés de fabrication recourant à un enlèvement mécanique de matière (fraisage, tournage, meulage, meulage fin, polissage, etc.),**caractérisé**
**en ce que** les ébauches (1) en matière synthétique utilisées sont serrées par leur bord extérieur (par fermeture ou extension) et la géométrie finale souhaitée de la surface ainsi que la qualité de surface du côté avant convexe (19) de lentille et du côté arrière concave (27) de lentille sont obtenues par enlèvement de matière à l'aide d'une fraise et/ou d'outils rotatifs ainsi que par meulage fin et éventuellement polissage,
une partie annulaire (30) située à la périphérie extérieure de la pièce (16) étant maintenue à une épaisseur (33) plus grande et la partie annulaire (30) servant dans toutes les opérations de traitement et de transport à serrer ou déposer la pièce (16),
la partie annulaire (30) soutenant en outre le verre de lunettes (32) proprement dit ou le corps façonné en vue de la poursuite de son traitement et le stabilisant mécaniquement,
**en ce que** des repères et/ou des façonnages sont ménagés sur la partie annulaire (30) et servent à identifier les axes de traitement,
**en ce que** des repères très fins qui servent à caractériser la position de l'axe de la géométrie formée sur la surface sont ménagés sur la surface du verre de lunettes (32) proprement dit ou du corps façonné et
**en ce que** le verre de lunettes (32) est ensuite découpé de la partie annulaire (30).

2. Procédé selon la revendication 1, **caractérisé en ce que** l'ébauche (1) en matière synthétique a un diamètre légèrement plus grand (de quelques millimètres) que ce que l'état de la technique imposerait comme diamètre du verre de lunettes (32) proprement dit.

3. Procédé selon les revendications 1 ou 2, **caractérisé en ce qu'**il utilise des ébauches (1) en matière synthétique dont le côté avant et le côté arrière présentent soit des surfaces planes soit des structures spatiales préformées en combinaison quelconque mais qui n'ont pas la qualité d'un effet optique.

4. Procédé selon l'une des revendications 1 à 4, **caractérisé en ce que** la formation de la géométrie de surface s'effectue d'abord par fraisage et ensuite dans la partie fine par tournage ou **en ce qu'**en variante, seul un traitement par fraisage ou un traitement par tournage a lieu.

5. Procédé selon l'une des revendications 1 à 5, **caractérisé en ce que** pour les opérations de fraisage, on utilise des fraises cylindriques (9) dont le diamètre perpendiculaire à l'axe de rotation est nettement plus grand que leur épaisseur dans la direction de l'axe de rotation et **en ce que** les tranchants de fraise (10) ont une configuration semi-circulaire à la périphérie de la fraise cylindrique (9) et présentent un petit diamètre (par exemple de 11 mm).

6. Procédé selon l'une des revendications 1 à 5, **caractérisé en ce que** pour les opérations de tournage, il utilise des outils rotatifs (12) qui sont placés à la périphérie extérieure d'une réserve (11) d'outils, qui sont circulaires ou présentent des parties circulaires sur leurs tranchants de coupe et qui ont un petit diamètre.

7. Procédé selon l'une des revendications 1 à 6, **caractérisé en ce que** les tranchants de fraisage (10) de la fraise cylindrique (9) sont utilisés comme outils rotatifs.

8. Procédé selon l'une des revendications 1 à 7, **caractérisé en ce que** des repères et des façonnages qui ont la forme de deux méplats (3 et 4) ou d'une plus grande entaille (35) ainsi que d'une indexation (15) sont ménagés sur les ébauches (1) en matière synthétique lors des étapes de travail du traitement de fraisage.

9. Procédé selon l'une des revendications 1 à 8, **caractérisé en ce que** le côté arrière concave (27) de lentille des verres de lunettes (32) est d'abord réalisé par fraisage et tournage avec ensuite des opérations de meulage fin et éventuellement de polissage et **en ce que** le verre de lunettes (32) est ensuite nettoyé et reçoit un revêtement de vernis protecteur ou une feuille de protection, le verre de lunettes (32) retourné étant ensuite usiné à l'aide des mêmes opérations sur le côté avant convexe (19) de lentille.

10. Procédé selon l'une des revendications 1 à 9, **caractérisé en ce que** l'épaisseur est optimisée lors de la réalisation du côté avant convexe (19) de lentille et du côté arrière concave (27) de lentille.

11. Procédé selon l'une des revendications 1 à 10, **caractérisé en ce que** lors de la réalisation de la géométrie, une superposition de différentes courbes ou géométries est réalisée sur le côté avant de la lentille dans le cadre de la fabrication selon des spécifications.

12. Procédé selon l'une des revendications 1 à 11, **caractérisé en ce que** dans le cadre de l'optimisation de l'épaisseur des verres de lunettes (32), lors du fraisage du côté avant convexe (19) de lentille, une rainure circulaire (31) qui délimite vers l'extérieur la partie annulaire (30) qui se prolonge vers l'intérieur en le verre de lunettes (32) proprement dit est formée dans la bordure de la pièce (16).

13. Procédé selon l'une des revendications 1 à 12, **caractérisé en ce que** lors de l'opération de tournage, la broche (20) d'outil est bloquée dans la direction de l'axe B avec la réserve (11) d'outils et ses outils rotatifs (12) et exécute en outre des déplacements contrôlés de translation dans la direction de l'axe X pendant que la broche (21) d'outil est mise en rotation contrôlée en phase et vitesse de rotation avec l'outil de serrage (18) et la pièce (16) dans la direction de l'axe C et exécute dans la direction de l'axe Z des déplacements de translation à haute dynamique.

14. Procédé selon l'une des revendications 1 à 13, **caractérisé en ce que** pendant le déplacement d'avancement de la broche (20) d'outil dans la direction de l'axe X, la réserve (11) d'outils et l'outil rotatif (12.1) engagé sur la pièce (16) exécutent de petits déplacements de rotation dans la direction de l'axe B, ce qui permet d'obtenir le déplacement souhaité de guidage angulaire et qu'ainsi l'axe principal de l'outil rotatif (12.1) prenne la position angulaire relative souhaitée par rapport à la surface de l'outil (16) pendant la totalité de l'opération de tournage.

15. Procédé selon la revendication 14, **caractérisé en ce que** pendant l'opération de tournage, la position angulaire de l'axe principal de l'outil rotatif (12.1) par rapport à la surface de la pièce (16) est modifiée de manière contrôlée par des déplacements de rotation dans la direction de l'axe B.

16. Procédé selon les revendications 14 ou 15, **caractérisé en ce que** pendant l'opération de tournage, la position angulaire de l'axe principal de l'outil rotatif (12.1) par rapport à la surface de la pièce (16) reste constante grâce à des déplacements de rotation dans la direction de l'axe B.

17. Dispositif en vue de l'exécution du procédé selon l'une des revendications 1 à 16, constitué de machines d'usinage qui présentent deux broches entraînées en rotation et aptes à être déplacées en translation, les rotations et les translations étant contrôlées, des outils de serrage et d'usinage étant reliés aux broches,
**caractérisé en ce que**
la machine de tournage-fraisage dispose d'une broche (20) d'outil apte à tourner dans la direction de l'axe B avec un contrôle de la phase et de la vitesse de rotation et à se déplacer de manière contrôlée dans la direction de l'axe Y et dans la direction de l'axe X, tandis que les broches (21) d'outil avec les outils de serrage (2) et (18) tournent avec un contrôle de leur phase et de leur vitesse de rotation et peuvent être déplacées en translation à haute dynamique dans la direction de l'axe Z, l'outil de serrage (2) disposant de découpes (6) et (8) et l'outil de serrage (18) d'éléments de serrage (28).

18. Dispositif selon la revendication 17, **caractérisé en ce que** la réserve (11) d'outils rotatifs (12) est fixée conjointement et coaxialement avec la fraise cylindrique (9) sur la broche (20) à outil.

19. Dispositif selon l'une des revendications 17 et 18, **caractérisé en ce que** quatre outils rotatifs (12.1) à (12.4) ou un nombre plus petit ou plus grand d'outils rotatifs sont fixés sur une réserve (11) d'outils et présentent des formes et des dimensions quelconques, et **en ce que** la réserve (11) d'outils exécute sur la broche (20) d'outil des déplacements de rotation dans la direction de l'axe B qui déplacent l'outil rotatif souhaité dans la position initiale d'usinage.

20. Procédé de fabrication selon des spécifications générales ou individuelles de verres de lunettes et d'autres corps façonnés à surfaces optiquement actives par recours à des pièces semi-finies fabriquées par des procédés de façonnage sans enlèvement de matière, par exemple moulage, moulage par injection ou compression au moyen d'outils de moulage ou d'outils de compression, avec ensuite des étapes mécaniques de fabrication, par exemple fraisage, tournage, meulage et polissage,
**caractérisé**
**en ce que** des pièces semi-finies (41) sont fabriquées par des procédés de façonnage sans enlèvement de matière,
**en ce que** le côté arrière concave (42) de lentille qui constitue la surface optiquement active ainsi qu'un bord de moulage (43) sont formés,
**en ce que** les pièces semi-finies (41) sont ensuite serrées dans des machines d'usinage par leur bord de moulage (43) pour y réaliser la géométrie souhaitée de la surface et la qualité du côté avant (45) de lentille par décolletage, meulage fin et éventuellement polissage, le bord de moulage (43) étant conservé et servant lors de toutes les autres opérations d'usinage et de transport à serrer ou placer la pièce (49), soutenant et stabilisant mécaniquement en outre le verre de lunettes (47) proprement dit ou le corps façonné, et
**en ce que** le verre de lunettes (47) ou le corps façonné est découpé du bord de moulage (43) à la fin des usinages.

21. Procédé selon la revendication 20, **caractérisé en ce qu'**un repère (44) est formé dans le bord moulé (43) de la pièce semi-finie (41) par un procédé de façonnage sans enlèvement de matière et caractérise la position de l'axe de la géométrie de surface du côté arrière concave, optiquement actif, de la lentille (42).

22. Procédé selon les revendications 20 ou 21, **caractérisé en ce que** lors de la fabrication de verres de lunettes (47), le côté avant convexe (45) de lentille reçoit par usinage mécanique une géométrie optiquement active qui est complétée par celle du côté arrière concave (42) de lentille, de telle sorte que le verre de lunettes (47) ainsi formé exerce un effet optique qui correspond aux spécifications prédéterminées sans que surviennent des sauts indésirables de dioptrie dans l'effet global du verre de lunettes (47), et ce en particulier sur des verres bifocaux.

23. Procédé selon l'une des revendications 20 à 22, **caractérisé en ce que** lors de la réalisation de la géométrie du côté avant convexe (45) de lentille dans le cadre d'une fabrication selon des spécifications, on réalise une superposition de différentes courbes ou géométries et on superpose en particulier des façonnages toriques, atoriques, prismatiques ou bifocaux.

24. Procédé selon l'une des revendications 20 à 23, **caractérisé en ce que** de très fines gravures qui permettent de repérer l'axe optique sont ménagées à la surface du verre de lunettes (47) avant que le verre de lunettes (47) soit découpé du bord de moulage (43).

25. Procédé selon l'une des revendications 20 à 24, **caractérisé en ce que** l'épaisseur est optimisée lors de la fabrication du côté avant convexe (45) de lentille.

26. Procédé de fabrication de verres de lunettes et d'autres corps optiques façonnés par recours à des pièces semi-finies qui sont réalisées par des procédés de façonnage sans enlèvement de matière, par exemple moulage, moulage par injection ou compression au moyen d'outils de moulage ou d'outils de compression, avec ensuite des opérations mécaniques de fabrication telles que fraisage, tournage, meulage et polissage,
**caractérisé**
**en ce que** des pièces semi-finies (41) sont fabriquées par des procédés de façonnage sans enlèvement de matière,
**en ce que** le côté avant convexe (45) de lentille qui constitue la surface optiquement active ainsi qu'un bord de moulage (43) sont formés,
**en ce que** les pièces semi-finies (41) sont ensuite serrées dans des machines d'usinage par leur bord de moulage (43) pour y réaliser la géométrie souhaitée de la surface et la qualité du côté arrière concave (42) de lentille par décolletage, meulage fin et éventuellement polissage, le bord de moulage (43) étant conservé et servant lors de toutes les autres opérations d'usinage et de transport à serrer ou placer la pièce (49), soutenant et stabilisant mécaniquement en outre le verre de lunettes (47) proprement dit ou le corps façonné, et
**en ce que** le verre de lunettes (47) ou le corps façonné est découpé de la bordure (50) et du bord de moulage (43) qui en fait partie.

27. Procédé selon la revendication 26, **caractérisé en ce que** lors de la fabrication de verres de lunettes (47), le côté arrière concave (42) de lentille reçoit par usinage mécanique une géométrie optiquement active qui est complétée par celle du côté avant convexe (45) de lentille, de telle sorte que le verre de lunettes (47) exerce un effet optique qui correspond aux spécifications prédéterminées.

28. Procédé selon les revendications 26 ou 27, **caractérisé en ce qu'**un repère (44) est formé dans la zone occupée par le bord de moulage (43) de la pièce semi-finie (41) au moyen d'un procédé de façonnage sans enlèvement de matière et caractérise la position de l'axe de la géométrie de surface sur le côté avant convexe (45) de lentille optiquement actif.

29. Procédé selon l'une des revendications 27 et 28, **caractérisé en ce que** lors de la réalisation sans enlèvement de matière de la géométrie, une superposition de différentes courbes ou géométries est réalisée sur le côté avant convexe (45) de lentille et **en ce qu'**en particulier des façonnages sphériques, asphériques, toriques ou atoriques éventuellement dotés de surfaces bifocales ou de surfaces progressives sont superposés.

30. Procédé selon l'une des revendications 26 à 29, **caractérisé en ce que** de très fines gravures de repérage de l'axe optique sont ménagées sur la surface du verre de lunettes (47) avant que le verre de lunettes (47) soit séparé de la bordure (50) et du bord de moulage (43) qui en fait partie.

31. Procédé selon l'une des revendications 26 à 30, **caractérisé en ce que** l'épaisseur est optimisée lors de la réalisation du côté arrière concave (42) de lentille au moyen de traitements d'usinage mécanique.

32. Dispositif en vue de l'exécution du procédé selon l'une des revendications 20 à 31, formé d'un outil de moulage qui est constitué de l'assemblage d'un moule avant, d'un moule arrière ainsi que d'un anneau d'étanchéité, lesdites trois parties étant reliées les unes aux autres de manière libérable et étanche, **caractérisé**
**en ce que** le moule arrière (56) dispose d'un appendice (60),
**en ce que** le moule arrière (56) présente un côté de moule (58) qui permet de former des surfaces optiquement actives et
**en ce que** le moule avant (54) présente un côté de moule (59) qui ne permet pas de former des surfaces optiquement actives.

33. Dispositif selon la revendication 32, **caractérisé en ce qu'**un bec (62) orienté avec une haute précision dans la direction de l'axe du côté (58) du moule arrière (56) est prévu au niveau de l'appendice (60).

34. Dispositif selon les revendications 32 ou 33, **caractérisé en ce que** l'appendice (60) présente une surface annulaire inclinée (61).

35. Dispositif selon l'une des revendications 32 à 34, **caractérisé en ce que** l'anneau d'étanchéité (55) présente une pente (63) sur son côté intérieur.

36. Dispositif selon l'une des revendications 32 à 35, **caractérisé en ce qu'**une cavité intérieure (57) est prévue entre le moule avant (54), le moule arrière (56) et l'anneau d'étanchéité (55).
